# EUROPEAN PATENT APPLICATION

(11) **EP 4 582 689 A1**
(43) Date of publication of application: **09.07.2025**
(21) Application number: 23860158.7
(22) Date of filing: 23.08.2023
(51) Int. Cl.: F03D 7/04

(54) **WIND POWER GENERATOR, METHOD FOR CONTROLLING WIND POWER GENERATOR, AND PROGRAM FOR CONTROLLING WIND POWER GENERATOR**

(30) Priority: 30.08.2022 JP 2022137354
(71) Applicant: SD Green Energy Inc., Tokyo 104-0043 (JP)
(72) Inventor: URUSHITANI, Toshiro, Tokyo 104-0043 (JP)
(74) Representative: Mewburn Ellis LLP
(86) International application number: PCT/JP2023/030355
(87) International publication number: WO 2024/048395

(57) **Abstract**

[Problem] To provide a wind power generator capable of size reduction of a windmill and which can continuously generate power stably without stopping the power generation without breakage even if a wind force increases.

[Solution] A configuration in which a coupling member 70 of a wind power generator 1 has a first bending portion 71 provided on a base part 31B side of a blade 31 and, upon receipt of a force of wind W, bending the blade 31 with respect to the coupling member 70 so as to enlarge a pitch angle α of the blade 31 with respect to a direction of the force of the wind W and a second bending portion 72 provided on a center member 50 side and bending the coupling member 70 with respect to the center member 50, upon receipt of the force of strong wind W, so as to further enlarge the pitch angle α of the blade 31 with respect to the direction of the force of the wind W, and when the force of stronger wind W is received after the coupling member 70 is bent with respect to the center member 50 in the second bending portion 72, the first bending portion 71 is further bent in order to release the force of the wind W, and the pitch angle α of the blade 31 with respect to the direction of the force of the wind W is further enlarged.

## Description

### Technical Field

The present invention relates to a wind power generator which generates power by rotating blades by using wind force, a control method of the wind power generator, and a control program of the wind power generator.

### Background Art

The wind power generator generates power by a power generator by rotating a windmill by using wind force and transmitting a rotating motion of the windmill to the power generator.

PTL 1 discloses a wind power generator including three blades, a support, and a tubular housing. On an upper part of the support of this wind power generator, the tubular housing is mounted, and on the tubular housing, a shaft is rotatably supported. At a distal end of the shaft, a triangular flat-plate is fixed. On the other hand, a root of each of the blades is coupled to a main hub member through each flat plate. The root of each of the blades and one end part of each of the flat plates are coupled by a first hinge of a mechanical coupling structure, and an end part of the main hub member and the other end part of each of the flat plates are coupled by a second hinge of the mechanical coupling structure. The triangular flat-plate and each of the flat plates are coupled by a coil spring.

By means of the structure of the wind power generator as above, the first hinge and the second hinge play a role of a folding line of each blade with respect to the main hub member and moreover, since an elastic force of the coil spring draws each flat plate toward the triangular flat-plate side, each blade is positioned at a stationary position in a form deviated to the triangular flat-plate side. That is, with respect to the distal end of each blade, when the blade is pushed by the wind force and the blade rotates, a centrifugal force acting along a longitudinal direction of the blade works against the elastic force of the coil spring, a wind speed rotates, and power is generated. By setting such that, as it increases, a pitch angle of the blade gradually decreases, a rotating speed of the blade is held constant.

### Citation List

### Patent Literature

PTL 1: Japanese Translation of PCT Application No. H5-503559

### Summary of Invention

### Technical Problem

However, with the structure of the conventional wind power generator, the root of each of the blades and one end part of each of the flat plates are coupled by the mechanical first hinge, and the end part of the main hub member and the other end part of each of the plates are coupled by the mechanical second hinge, and the motion of each blade is only suppressed by the spring. Therefore, when wind force or particularly strong wind or violent wind blows, and the wind force applied to each blade increases by a certain level or more, the blade or the first hinge and the second hinge of the flat plate cannot bear that and are broken, and there is a concern that continuous and stable power generation cannot be realized. In addition, the lives of the first hinge and the second hinge are short, if they are exposed to wind and rain, and the number of times of maintenance for the wind power generator increases.

In addition, another type of the conventional wind power generators includes such wind power generator including a variable pitch mechanism which mechanically changes a direction of a blade in accordance with the wind force. However, the wind power generator including this variable pitch mechanism has a complicated structure, which cannot avoid size enlargement and a weight increase, and installation of the wind power generator is not easy.

The present invention was made in order solve the above-described problem and has an object to provide a wind power generator, a control method of a wind power generator, and a control program of a wind power generator, capable of size reduction of a windmill and continuous and stable power generation without breakage or stopping power generation even if wind force increases.

### Solution to Problem

The above-described object is achieved, according to the present invention, by a wind power generator of the present invention, which rotates a windmill by using wind force and transmitting a rotating motion of the windmill to a power generator and converting it to electricity, including a tower and a main body rotatably supported in the tower, in which the windmill is rotatably held on one end part of the main body, the power generator is held by the other end part of the main body, a horizontal shaft part transmitting the rotating motion from the windmill to the power generator is accommodated in the main body, the windmill includes a center member fixed to the horizontal shaft part, a fixing member fixed to the horizontal shaft part in a state facing the center member at an interval, a plurality of blade members, a coupling member disposed between a base part of each of the blade members and the center member and coupling the base part of the blade member and the center member, and an elastic mechanism portion disposed between a part of the coupling member on the base part side of the blade member and the fixing member and suppressing movement of the blade member with respect to the fixing member generated by the wind force, when the blade member receives the wind force from the power generator side in a direction of the windmill, the coupling member has a first bending portion provided on the base part side of the blade member and bending the blade member with respect to the coupling member so as to enlarge a pitch angle of the blade member with respect to a direction of the wind force, upon receipt of the wind force, and a second bending portion provided on the center member side and bending the coupling member with respect to the center member, upon receipt of the wind force, which is strong, so as to further enlarge the pitch angle of the blade member with respect to the direction of the wind force, and when the wind force, which is stronger, is received after the coupling member is bent with respect to the center member in the second bending portion, the first bending portion is further bent in order to release the wind force, and the pitch angle of the blade member with respect to the direction of the wind force is further enlarged.

According to the above-described configuration, the first bending portion of the coupling member enlarges the pitch angle of the blade member with respect to the direction of the wind force by bending the blade member with respect to the coupling member, when it receives the wind force. The second bending portion of the coupling member further enlarges the pitch angle of the blade member with respect to the direction of the wind force by bending the coupling member with respect to the center member, when it receives the strong wind force. Moreover, when the stronger wind force is received in the second bending portion after the coupling member is bent with respect to the center member, by further bending the first bending portion in order to release the wind force so that the pitch angle of the blade member with respect to the direction of the wind force can be further enlarged. As a result, when the power generator generates power, upon receipt of the wind force by the blade member of the windmill, the pitch angle of the blade member is continuously changed in accordance with intensity of the wind force and thus, the power generator can continuously generate power without breaking the blade member or without interrupting the power generation operation, even when the wind force rapidly increases, and stronger wind force is received. The wind power generator of the present invention is configured such that only the windmill, the power generator, and the horizontal shaft part are mounted on the main body and thus, size reduction of the windmill is possible, and continuous and stable power generation can be performed without breakage or stopping power generation even if the wind force increases.

Preferably, the elastic mechanism portion of the wind power generator is characterized by having a first elastic member which exerts a tensile elastic force, upon receipt of the strong wind force and a second elastic member that has stronger tensile elastic force than that of the first elastic member and exerts the tensile elastic force subsequent to the first elastic member.

According to the above-described configuration, after the first elastic member of the elastic mechanism portion begins to exert the tensile elastic force, upon receipt of the wind force, the strong second elastic member exerts the tensile elastic force. It is known that the wind force energy is in proportion to a wind-receiving area of the wind in the blade member and in proportion to the cube of the wind speed, but by preparing the first elastic member and the second elastic member with the tensile elastic force larger than that of the first elastic member, the elastic mechanism portion can respond to the wind force energy which rapidly increases, suppress the movement of the blade member with respect to the fixing member generated by the wind force, upon receipt of the wind force, and appropriately receive the wind force. Thus, even when the wind force increases, power generation can be performed continuously and stably without breakage or stopping the power generation.

Preferably, the blade member of the wind power generator is a plate-shaped member that can bear the wind force and is characterized by being formed to be tapered from the base part side toward the distal end part on the side opposite to the base part.

According to the above-described configuration, since the blade member is a plate-shaped member that can bear the wind force and is formed to be tapered, durability and weight reduction of the windmill can be promoted.

Preferably, the blade member of the power generator is characterized to be a plate-shaped member formed of a glass thermoplastic resin composite material.

According to the above-described configuration, since the blade member is formed of a glass thermoplastic resin composite member, improvement of weight reduction and durability of the windmill can be promoted.

Preferably, it is characterized such that the first elastic member of the wind power generator is constituted by a plurality of coil springs, the second elastic member is constituted by a plurality of the coil springs, and immediately after the first elastic member received the strong wind force and exerted the tensile elastic force, the second elastic member has a dead area in which the tensile elastic force is not exerted, and while the first elastic member exerts the tensile elastic force, the second elastic member continuously exerts the tensile elastic force.

According to above-described configuration, the second elastic member of the wind power generator has a dead area in which the tensile elastic force is not exerted, and when the first elastic member exerts the tensile elastic force, the second elastic member continuously exerts the tensile elastic force. As a result, the elastic mechanism portion can respond to the wind force energy which rapidly increases, suppress the movement of the blade member with respect to the fixing member generated by the wind force, upon receipt of the wind force, and appropriately receive the wind force. Thus, even if the wind force increases, power generation can be performed continuously and stably without breakage or stopping the power generation.

Preferably, it is characterized such that the windmill of the wind power generator has three pieces of the blade members, and the center member and the fixing member are equilateral triangular plate-shaped members, respectively, and the first bending portion side of the coupling member is detachably fixed to the base part of the blade member, and the second bending portion side of the coupling member is detachably fixed to one side part of the center member.

According to the above-described configuration, since the center member and the fixing member respectively use equilateral triangular plate-shaped members, weight reduction and size reduction of the windmill can be promoted. Since the coupling member is detachably fixed to the base part of the blade member and the center member, replacement of the coupling member at an installation site at the maintenance is easy.

Preferably, the power generator of the wind power generator is formed as a thin type with respect to the axial direction of the horizontal shaft part, and it is characterized that the gravity center between the windmill and the power generator in the main body matches the shaft center of the tower.

According to the above-described configuration, the power generator is a thin type with respect to the horizontal shaft part, and the gravity center between the windmill and the power generator in the main body matches the shaft center of the tower. Thus, the main body rotates around the shaft of the tower as the center by following the direction of the wind, which is changing from time to time, and can apply the wind from the power generator side toward the windmill side all the time, and the power generator can continuously generate power.

Preferably, the power generator of the wind power generator is characterized by having a rotor coupled to the horizontal shaft part and having a magnet and a stator having a coil generating power by rotation of the rotor in synchronization with rotation of the windmill, and the power generator is a brushless power generator.

According to the above-described configuration, the rotor of the power generator is coupled to the horizontal shaft part, and since the structure is a simple brushless power generator, size reduction and weight reduction of the wind power generator can be promoted.

Preferably, it is characterized such that the windmill of the wind power generator and the rotor of the power generator are directly connected by the horizontal shaft part without via a gear box.

According to the above-described configuration, since there is no need to provide a gear box in the main body, size reduction and weight reduction of the main body can be promoted, the wind can be applied toward the windmill side from the power generator side all the time, and the power generator can continuously generate power.

Preferably, it is characterized such that the main body of the wind power generator is made of metal in a cylindrical shape, and in the main body, a power transmission device which sends the electric power generated by the power generator from the main body side to the tower side is disposed.

According to the above-described configuration, it is configured such that the power transmission device is disposed in the cylindrical main body made of metal and transmits the electric power generated by the power generator from the main body to the tower side and thus, the power transmission device can be protected by the main body from a harsh external environment such as solar radiation, wind and rain, salt damage or the like. Therefore, the electric power generated by the power generator can be safely supplied to the tower side stably for a long time.

Preferably, the power transmission device of the wind power generator is characterized by including a slip ring on a fixed side, which does not follow a rotating operation on the main body side, when the main body rotates with respect to the tower in accordance with the direction in which the wind blows, since the power transmission device is fixed to the tower side; a brush in electric and moreover, mechanical contact with the slip ring on the fixed side and fixed to the main body side and thus, capable of integral rotation with the main body, when the main body rotates with respect to the tower in accordance with the direction in which the wind blows, and transmitting the electric power generated by the power generator to the slip ring; and an accommodating container accommodating the slip ring and the brush in a sealed manner and rotating with the main body and the brush by following the rotating operation of the main body generated in accordance with the direction in which the wind blows.

According to above-described configuration, since the slip ring of the power transmission device is fixed to the tower side, this slip ring is an element on the fixed side without following the rotating operation on the main body side, when the main body rotates with respect to the tower. On the other hand, the brush of the power transmission device is an element on the rotation side in electric and moreover, mechanical contact with the slip ring and fixed to the main body side. This brush is rotatable integrally with the main body, when the main body rotates with respect to the tower in accordance with the direction in which the wind blows, and transmits the electric power generated by the power generator to the slip ring. The accommodating container accommodates the slip ring and the brush in the sealed manner and rotates with the main body and the brush by following the rotating operation of the main body. As a result, the brush of the power transmission device can transmit the electric power from the power generator, while rotating with the main body in accordance with the direction in which the wind blows, to the slip ring on the tower side stably all the time.

Preferably, the accommodating container of the wind power generator is characterized by including an accommodating main-body fixed to the main body side, accommodating the slip ring and the brush, and having an opening part and a lid body detachably closing the opening part of the accommodating main-body and sealing the slip ring and the brush in the accommodating main-body from an outside.

According to the above-described configuration, by closing the opening part of the accommodating main-body by the lid body in the sealed manner, the slip ring and the brush accommodated in the accommodating main-body can be protected by the main body and the accommodating container from the harsh external environment such as solar radiation, wind and rain, salt damage or the like. Therefore, the electric power generated by the power generator can be safely supplied to the tower side stably for a long time. In addition, since the lid body is configured to detachably close the opening part of the accommodating container, the slip ring and the brush can be easily maintained by removing the lid body, whereby maintenance performance is improved.

Preferably, it is characterized such that the electric power generated by the power generator of the wind power generator is 3-phase AC electromotive force, the power generator is formed as a thin type with respect to the axial direction of the horizontal shaft part, the gravity center between the windmill and the power generator in the main body matches the shaft center of the tower, and the slip ring is located at the shaft center of the tower.

According to the above-described configuration, since the slip ring on the fixed side is located at the shaft center of the tower, the slip ring can be fixed to a stable position of the tower. And in accordance with the direction in which the wind blows, when the main body, the accommodating container, and the brush rotate around the shaft center of the tower, the brush can smoothly transmit the electric power from the brush to the slip ring side while being in electric and moreover, mechanical reliable contact with the outer peripheral surface of the slip ring.

Preferably, it is characterized such that, to the slip ring of the wind power generator, a power transmission cable for transmitting electric power to an electric-power supply target is electrically connected, and the power transmission cable is electrically connected to the electric-power supply target through an inside of the tower.

According to the above-described configuration, the transmission cable electrically connected to the slip ring can be protected from the harsh external environment such as solar radiation, wind and rain, salt damage or the like by being passed through the tower and thus, the electric power generated by the power generator can be safely supplied to the electric-power supply target through the tower stably for a long time.

Preferably, it is characterized such that the main body of the wind power generator includes a brake device for stopping rotation of the horizontal shaft part.

According to the above-described configuration, at the time of maintenance or when emergency stop is needed, rotation of the horizontal shaft part and the windmill can be safely stopped by using the brake device.

Preferably, the tower of the wind power generator is characterized by having a tower drive-operation portion which can transfer from an upright state to a maintenance state for maintenance by being tilted with respect to an installation part of the tower.

According to the above-described configuration, the tower drive-operation portion can transfer the main body, the windmill, and the power generator to the maintenance state at the time of maintenance and, in this maintenance state, it can remove the lid body from the accommodating main-body, and when it is removed, the slip ring and the brush in the accommodating main-body can be easily maintained, whereby the maintenance performance is improved.

The above-described object is, according to the present invention, achieved by a control method of a wind power generator which rotates a windmill by using wind force, transmitting a rotating motion of the windmill to the power generator and converting it to electricity, including: a tower and a main body rotatably supported in the tower, in which the windmill is rotatably held on one end part of the main body; the power generator is held on the other end part of the main body; a horizontal shaft part which transmits the rotating motion from the windmill to the power generator is accommodated in the main body; the windmill has: a center member fixed to the horizontal shaft part; a fixing member fixed to the horizontal shaft part in a state facing the center member at an interval; a plurality of blade members; and a coupling member disposed between the base part of each of the blade members and the center member and coupling the base part of the blade member and the center member, configured such that an elastic mechanism portion disposed between a part of the coupling member on the base part side of the blade member and the fixing member suppresses movement of the blade member with respect to the fixing member generated by the wind force, when the blade member receives the wind force from the power generator side in a direction of the windmill, a first bending portion of the coupling member is provided on the base part side of the blade member and bends the blade member with respect to the coupling member and enlarges a pitch angle of the blade member with respect to a direction of the wind force, upon receipt of the wind force, a second bending portion of the coupling member is provided on the center member side and bends the coupling member with respect to the center member, upon receipt of the wind force, which is strong, and further enlarges the pitch angle of the blade member with respect to the direction of the wind force, and when the wind force, which is much stronger, is received after the coupling member is bent with respect to the center member in the second bending portion, the first bending portion is further bent in order to release the wind force, and the pitch angle of the blade member with respect to the direction of the wind force is further enlarged.

The above-described object is, according to the present invention, achieved by a control program of a wind power generator for causing the wind power generator which rotates a windmill by using wind force, transmitting a rotating motion of the windmill to the power generator and converting it to electricity, including: a tower and a main body rotatably supported in the tower, in which the windmill is rotatably held on one end part of the main body; the power generator is held on the other end part of the main body; a horizontal shaft part transmitting the rotating motion from the windmill to the power generator is accommodated in the main body; the windmill having: a center member fixed to the horizontal shaft part; a fixing member fixed to the horizontal shaft part in a state facing the center member at an interval; a plurality of blade members; and a coupling member disposed between the base part of each of the blade members and the center member and coupling the base part of the blade member and the center member is made to cause an elastic mechanism portion disposed between a part of the coupling member on the base part side of the blade member and the fixing member to realize a function for suppressing movement of the blade member with respect to the fixing member generated by the wind force, when the blade member receives the wind force from the power generator side in a direction of the windmill, a function for causing a first bending portion of the coupling member provided on the base part side of the blade member to bend the blade member with respect to the coupling member so as to enlarge a pitch angle of the blade member with respect to a direction of the wind force, upon receipt of the wind force, a function for causing a second bending portion of the coupling member provided on the center member side to bend the coupling member with respect to the center member, upon receipt of the wind force, which is strong, so as to further enlarge the pitch angle of the blade member with respect to the direction of the wind force, and a function, when the wind force, which is much stronger, is received after the coupling member is bent with respect to the center member in the second bending portion, for causing the first bending portion to be further bent in order to release the wind force and to further enlarge the pitch angle of the blade member with respect to the direction of the wind force. Advantageous Effects of Invention

According to the present invention, a wind power generator, a control method of the wind power generator, and a control program of the wind power generator capable of size reduction of a windmill and continuous and stable power generation without breakage or stopping the power generation even if the wind force increases can be provided.

### Brief Description of the Drawings

[Fig. 1]

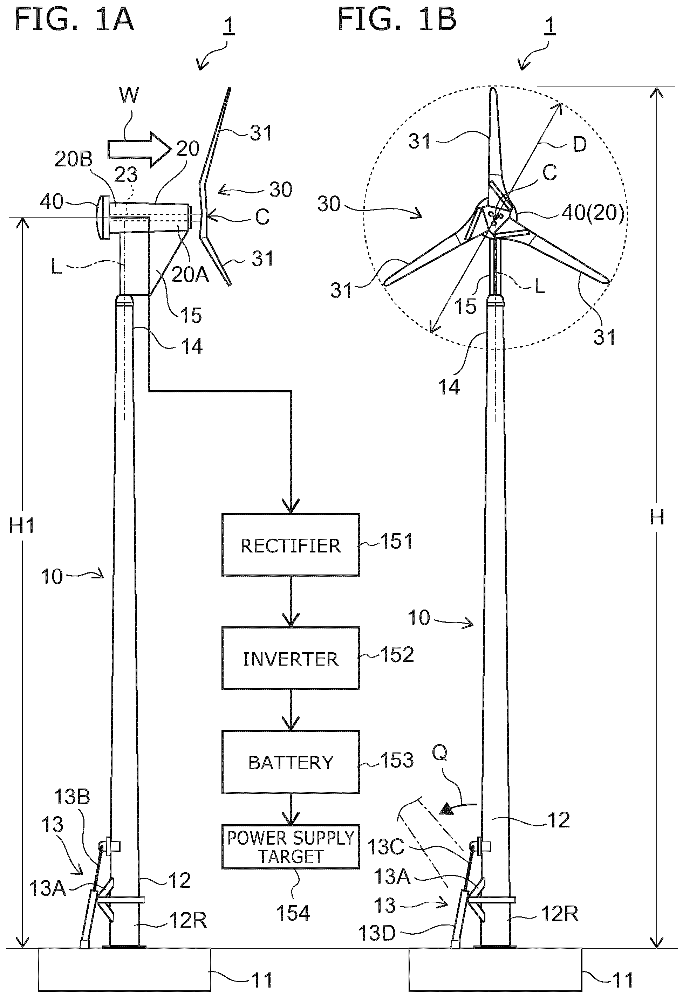

   Fig. 1(A) is a side view of a wind power generator according to an embodiment of the present invention, and Fig. 1(B) is a front view of the wind power generator.
[Fig. 2]

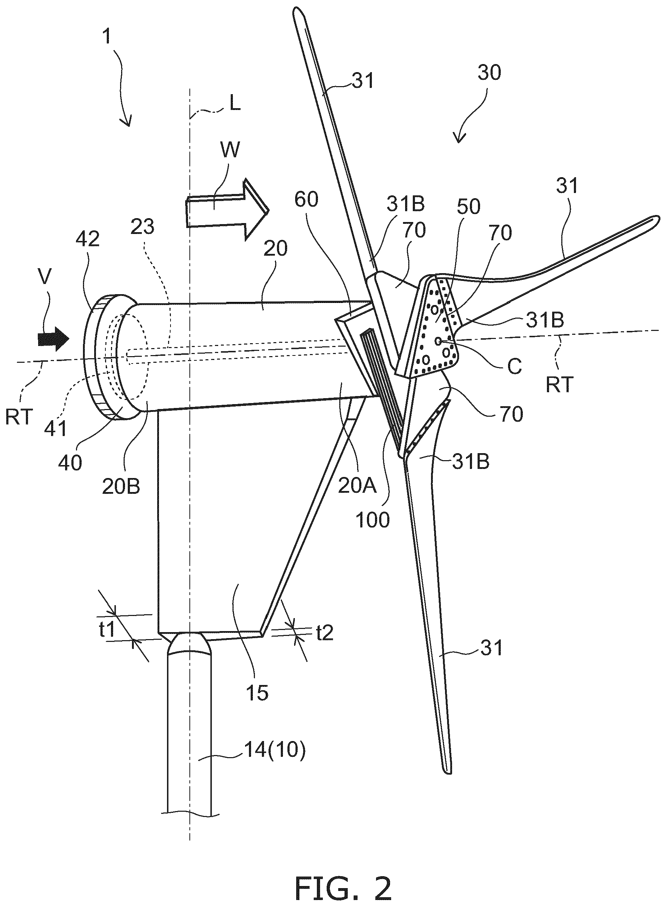

   Fig. 2 is a perspective view illustrating a main body, a windmill, and a power generator shown in Figs. 1.
[Fig. 3]

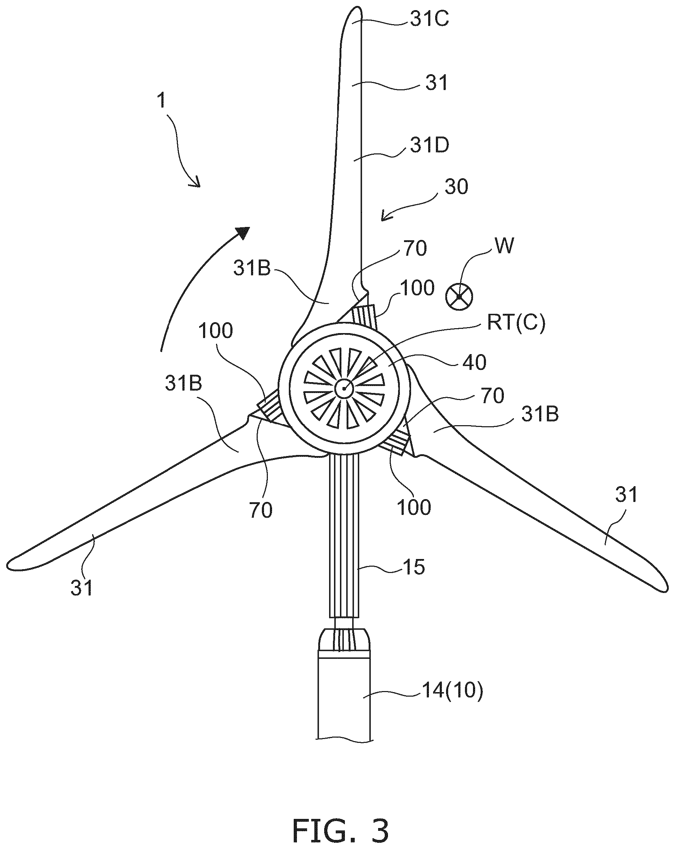

   Fig. 3 is a view illustrating the power generator and the like as viewed from a V-direction of Fig. 2.
[Fig. 4]

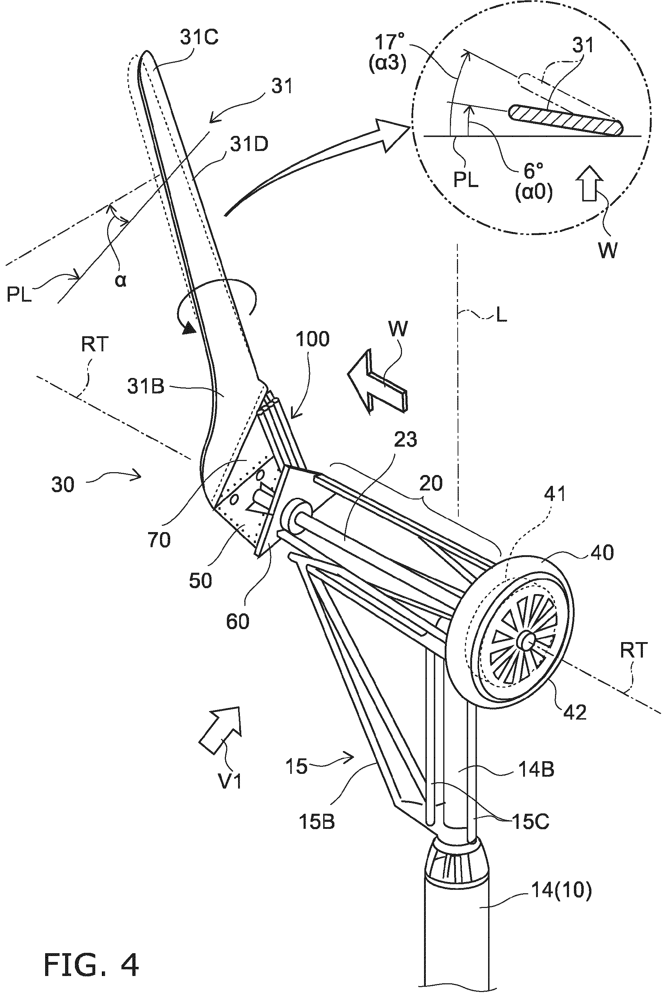

   Fig. 4 is a perspective view illustrating a part of the windmill, an internal structure example of the main body, and the power generator.
[Fig. 5]

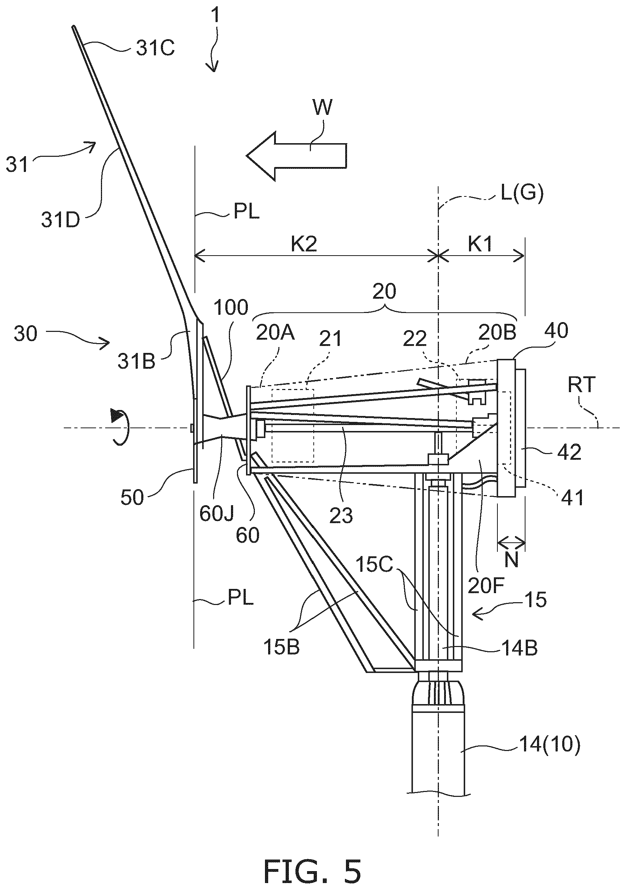

   Fig. 5 is a diagram illustrating a part of the windmill and an internal structure example of the main body and the power generator as viewed from a V1-direction of Fig. 4.
[Fig. 6]

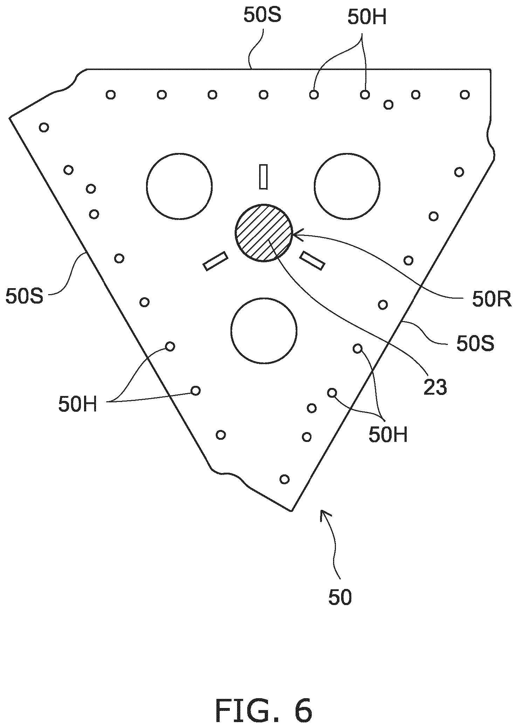

   Fig. 6 is a plan view illustrating a shape example of a center member.
[Fig. 7]

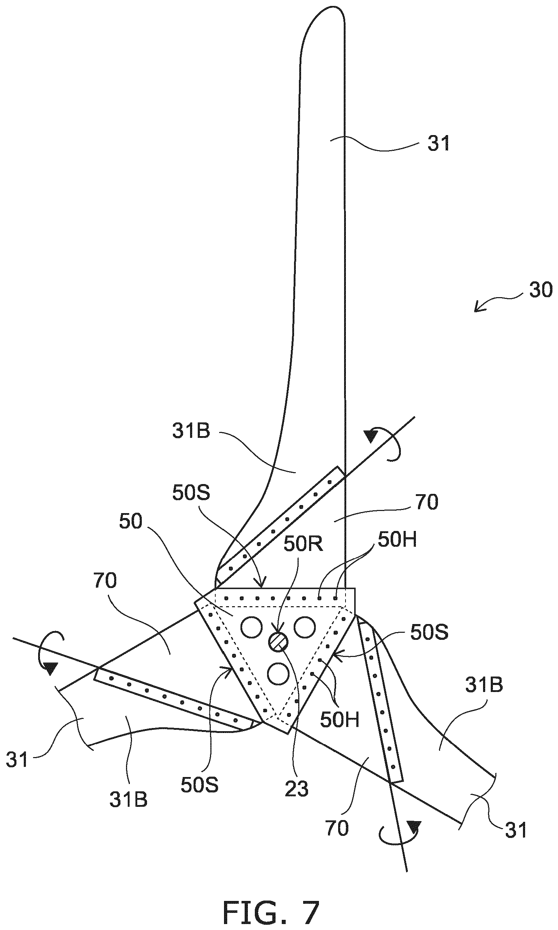

   Fig. 7 is a plan view illustrating a coupled state of the center member, a coupling member, and three blades.
[Fig. 8]

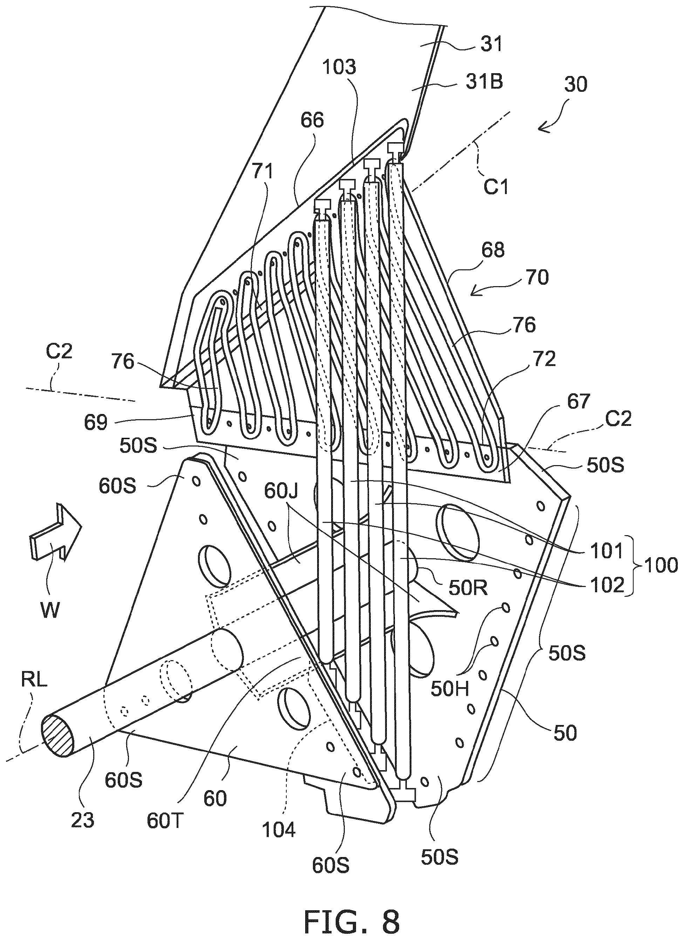

   Fig. 8 is a perspective view illustrating a coupled state of the center member, the coupling member, the blade, and an elastic mechanism portion constituting the windmill.
[Fig. 9]

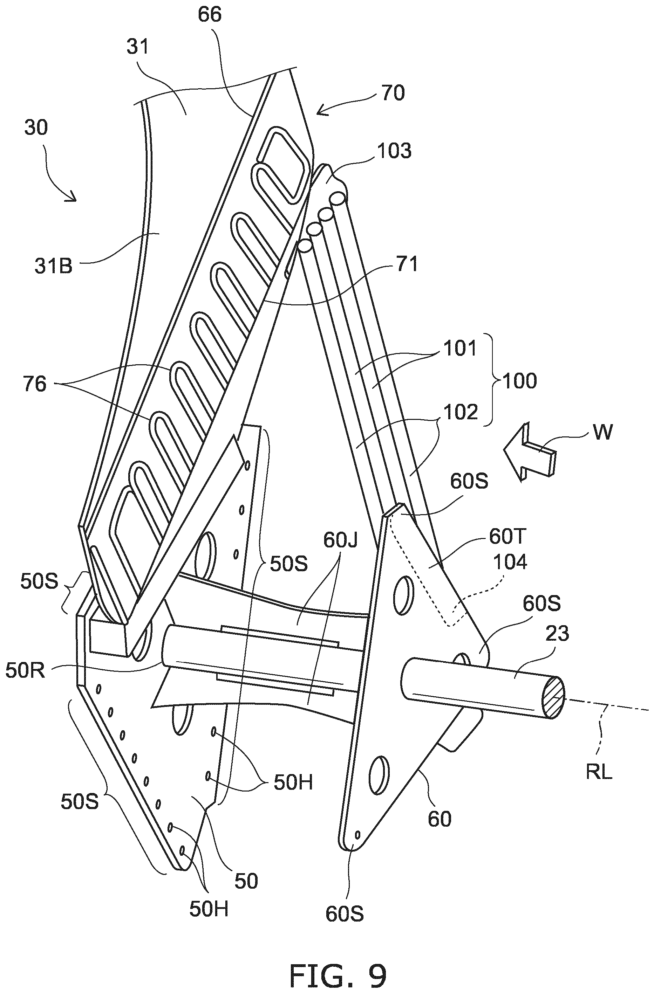

   Fig. 9 is a perspective view illustrating the coupled state of the center member, the coupling member, the blade, and the elastic mechanism portion constituting the windmill from another angle.
[Fig. 10]

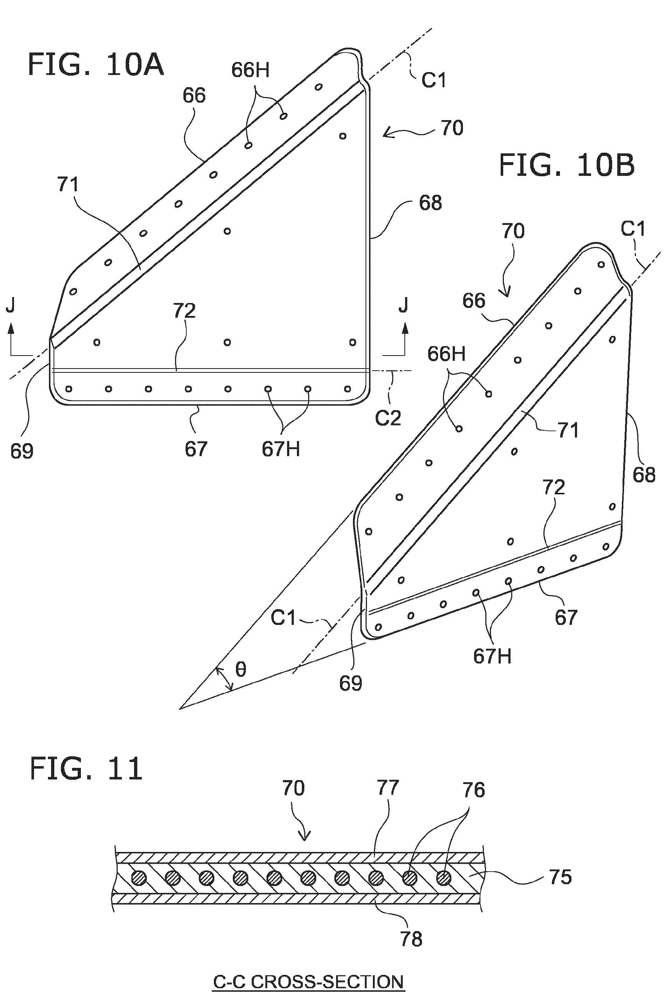

   Figs. 10 are diagrams illustrating a shape example of the coupling member.
[Fig. 11]
   Fig. 11 is a cross-sectional view on a J-J line of the coupling member.
[Fig. 12]

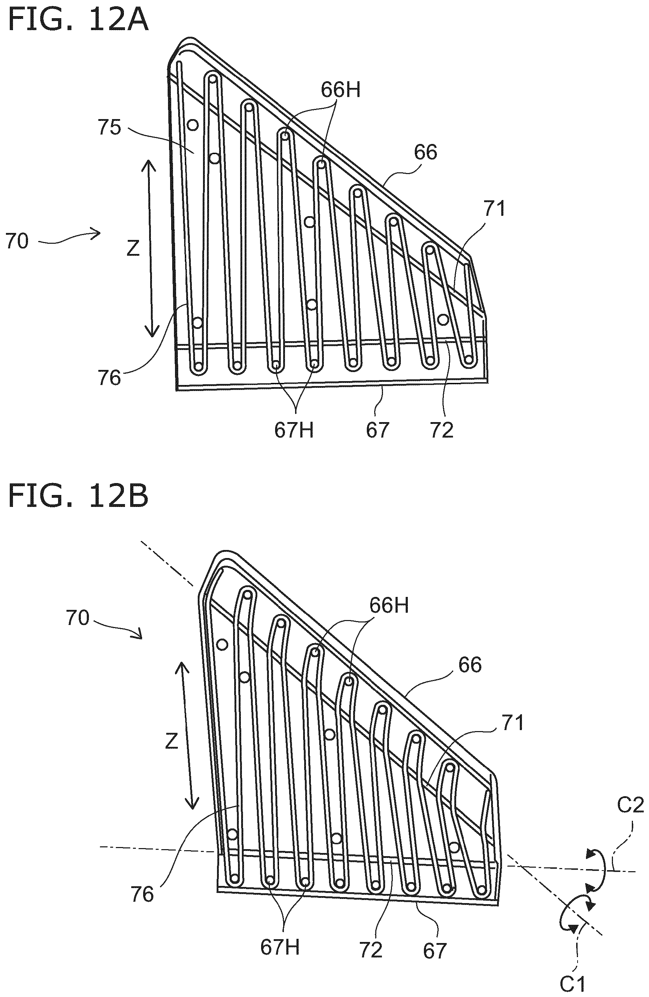

   Figs. 12 are diagrams illustrating an example of a reinforcing member disposed in a main layer of the coupling member.
[Fig. 13]

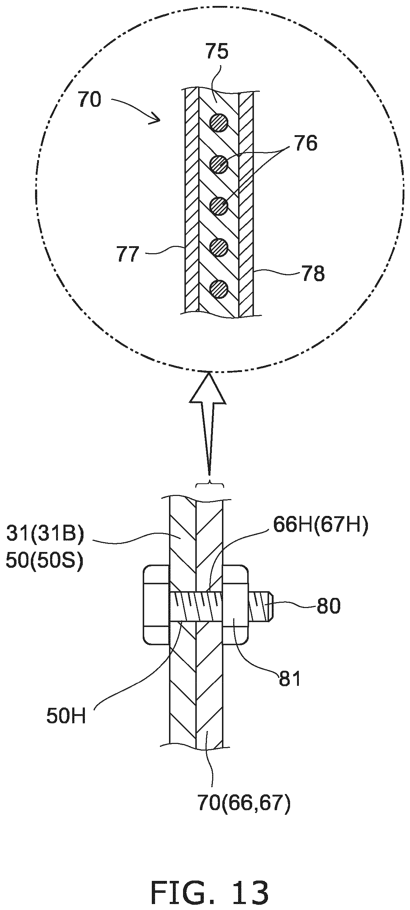

   Fig. 13 is a diagram illustrating a detachable coupling example of the coupling member.
[Fig. 14]

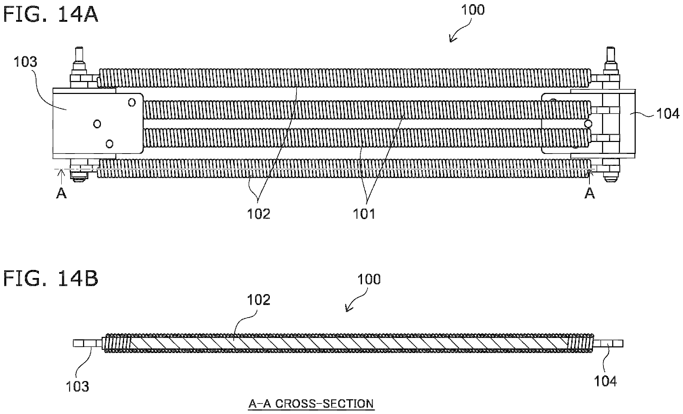

   Fig. 14(A) is a front view illustrating a preferable structure example of an elastic mechanism portion, Fig. 14(B) is a cross-sectional view on an A-A line in Fig. 14(A).
[Fig. 15]

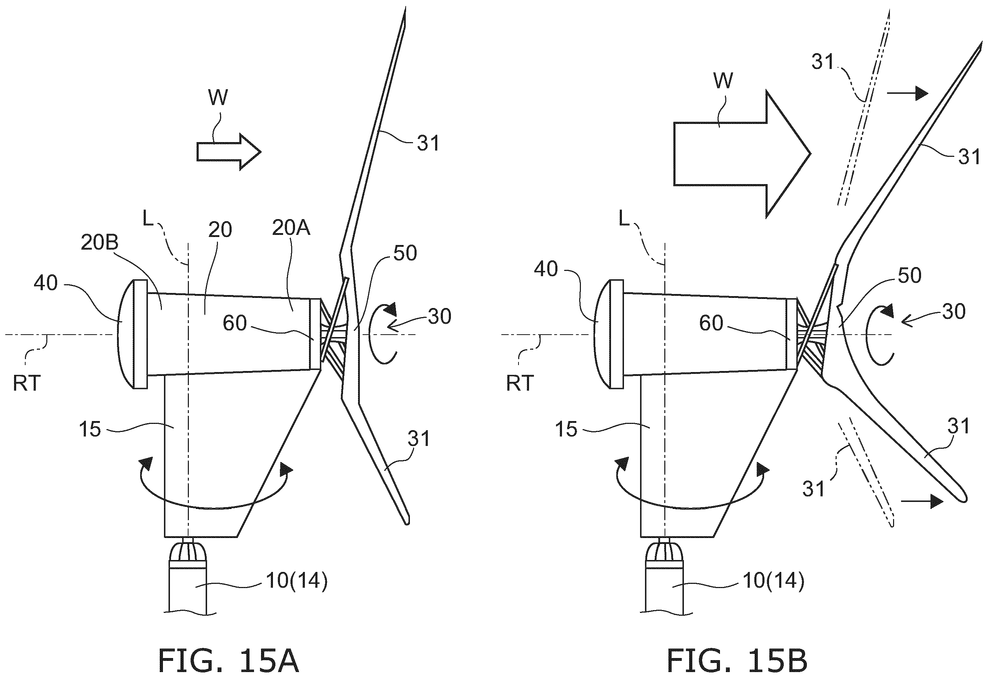

   Figs. 15 are diagrams illustrating a state of a blade when a force of wind W is received.
[Fig. 16]

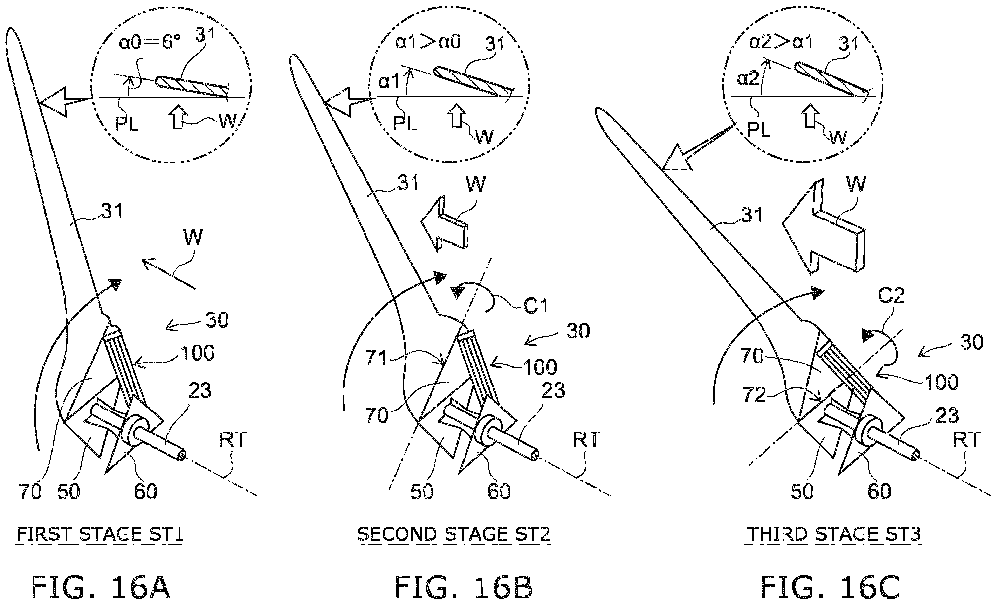

   Figs. 16 are perspective views illustrating a state of the blade when the force of wind is received.
[Fig. 17]

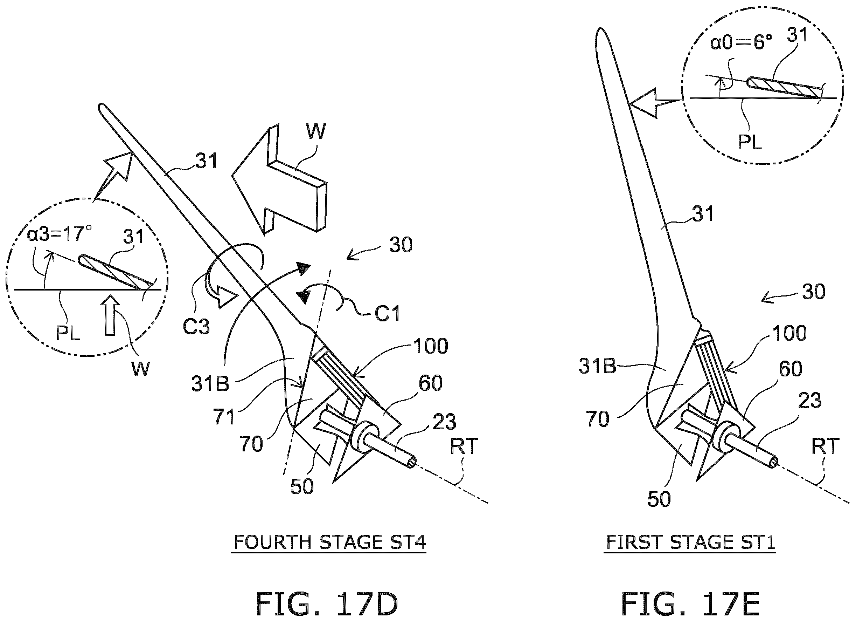

   Figs. 17 are perspective views illustrating another state of the blade when the force of wind is received.
[Fig. 18]

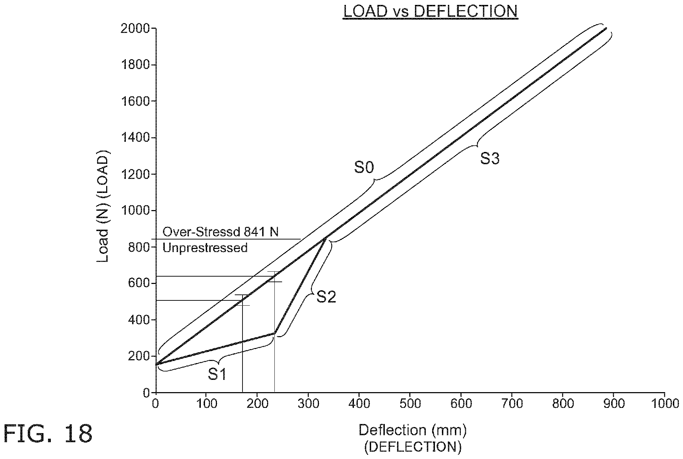

   Fig. 18 is a diagram illustrating a change example of a first elastic member and a second elastic member caused by exertion of a tensile elastic force by the first elastic member and the second elastic member of the elastic mechanism portion.
[Fig. 19]

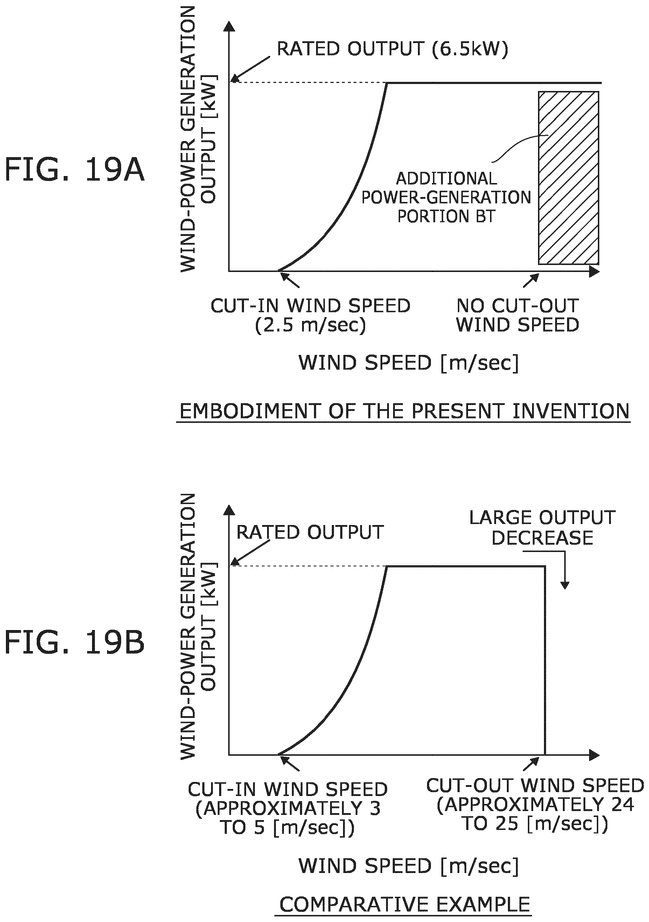

   Fig. 19(A) illustrates a relationship example of a wind power-generation output and a wind speed of a wind power generator of an embodiment of the present invention, and Fig. 19(B) is a diagram illustrating a relationship example of the wind power-generation output and a wind speed of a wind power generator a comparative example.
[Fig. 20]

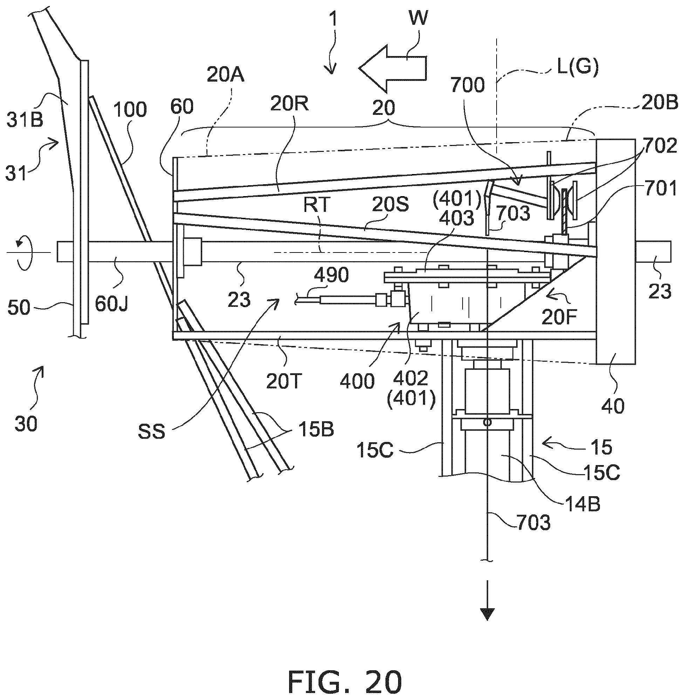

   Fig. 20 is a diagram illustrating a power transmission device and a power generator disposed in an internal structure of the main body illustrated in Fig. 5.
[Fig. 21]

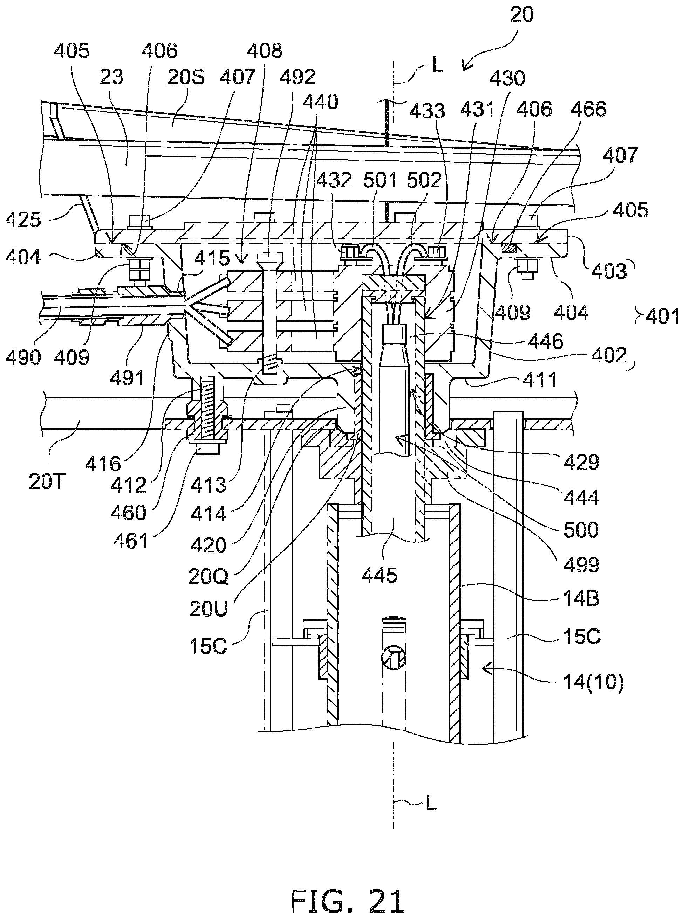

   Fig. 21 is a cross-sectional diagram illustrating a preferred structure example of the power transmission device shown in Fig. 20 and a peripheral part thereof in more detail.
[Fig. 22]

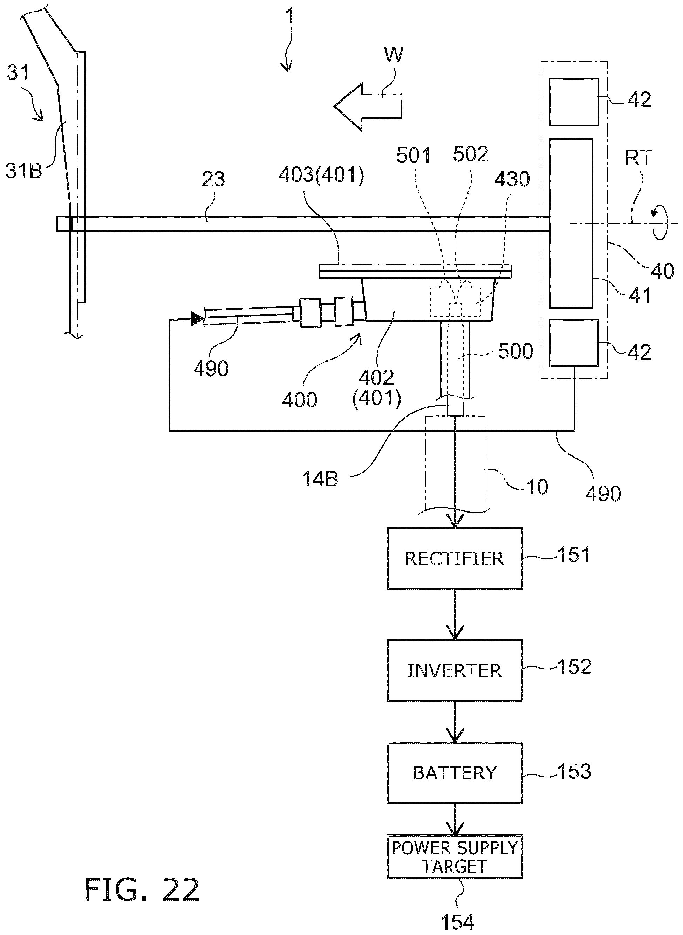

   Fig. 22 is a diagram illustrating an example of a power transmission system in which electric power generated by the power generator is transmitted to a rectifier through the power transmission device and a power transmission cable.
[Fig. 23]

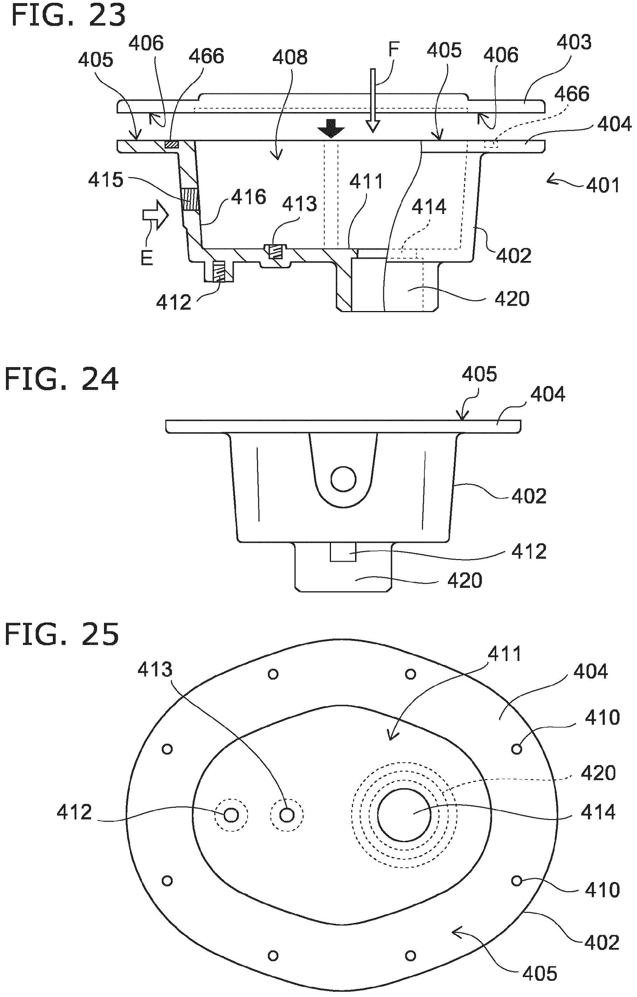

   Fig. 23 is a front view having a partial cross-section illustrating a structure example of an accommodating container.
[Fig. 24]
   Fig. 24 is a side view of the accommodating main-body in Fig. 23 as viewed from an E-direction.
[Fig. 25]
   Fig. 25 is a plan view of the accommodating main-body in Fig. 23 as viewed from an F-direction.

### Description of Embodiments

Hereinafter, a preferred embodiment of the present invention will be explained in detail with reference to the drawings.

Note that, the embodiment explained below is a preferred specific example of the present invention and thus, various limitations that are technically preferable are given, but the scope of the present invention is not limited to these forms unless there is a description with the gist of particularly limiting the present invention in the following explanation. In addition, in each of the drawings, the same signs are given to the similar constituent elements, and detailed explanation will be omitted as appropriate.

### (Entire Explanation of Wind Power Generator 1)

Figs. 1 illustrate a wind power generator according to an Embodiment of the present invention. Fig. 1(A) is a side view of a wind power generator 1 according to the Embodiment of the present invention, and Fig. 1(B) is a front view of the wind power generator 1. The wind power generator 1 shown in Figs. 1 is a wind power generator which has a propeller-type windmill 30 having a plurality of blades 31 and generates power by using a wind force. As shown in Fig. 1(A), this wind power generator 1 is a horizontal-type wind power generator having a horizontal shaft 23, which is a horizontal shaft part in which a rotating shaft of the windmill 30 is horizontal, for example.

The wind power generator 1 uses natural energy and does not emit carbon dioxide and the like at power generation and thus, it is environment-friendly. This wind power generator 1 can continuously generate power stably without stopping the power generation even in an area with weak wind, an area with strong wind or an area where strength and weakness of wind are intense, power-generation efficiency thereof is favorable, noises are hardly emitted, and installation is possible in a wide variety of installation sites such as remote islands, isolated districts and the like. The wind power generator 1 can be used for power generation for ordinary homes, power generation for agriculture, power generation for electric communication businesses, power generation for public utilities, power generation in remote islands and the like, for example. In a strong wind exceeding 25 m/sec, the normally used wind power generators need to stop the power generation operation by stopping the rotation of the windmill for safety. However, the wind power generator 1 of the Embodiment of the present invention has a feature that power can be generated continuously without interrupting the power generation operation by preventing breakage on the windmill 30 even under an environment with a wind speed exceeding 25 m/sec after passage of an intense low atmospheric pressure, a hurricane or the like.

Moreover, the wind power generator 1 can continuously generate power even under an environment with the Class 1 wind speed at 70 m/sec or more, for example, and can continue the power generation operation even in a case where the other normal wind power generators are forced to be stopped due to strong wind. Particularly, since the wind power generator 1 can continue the power generation operation without interruption even in the case of strong wind such as a hurricane or the like and a storm, power sources can be ensured in the remote islands, polar regions such as the South Pole, on the ocean, on the mountain tops and the like.

This wind power generator 1 includes a simple structure and can eliminate failures as much as possible. As shown in Fig. 1(A), the wind power generator 1 includes the so-called down-wind type windmill 30, which receives the force of the wind W from the rear from the power generator 40 side and thus, the windmill 30 automatically faces a main wind direction and can continue power generation by turning aside not only normal weak wind W but also much stronger wind W such as strong wind, turbulence or the like. The windmill 30 of the wind power generator 1 is a down-wind type windmill capable of power generation of approximately 6.5 kW, for example, and has explosion-proof specification.

The wind power generator 1 has a simple structure, a small size, and a light weight and thus, an installation work, a maintenance work, and a removal work are easy. The wind power generator 1 can create locally-generated and locally-consumed renewable energy and contribute to a recycling low-carbon society. As applications for introduction, the wind power generator 1 can be used for multiple categories such as a communication base, industrial and railway applications, power-feeding for electric automobiles, desalination facilities, military facilities and the like, for example.

The wind power generator 1 shown in Figs. 1 rotates the windmill 30 by using the force of the wind W, transmits a rotating motion of the windmill 30 to the power generator 40, and converts it to electricity. The wind power generator 1 schematically includes a tower 10, which is a support, a main body 20, the windmill 30, which is a rotor, and the power generator 40.

The windmill 30 has a plurality of blades 31 (in the illustrated example, three windmills 30). It is known that wind power energy of the wind W that can be received by the windmill 30 is in proportion to a wind-receiving area of the wind W in the blade 31, that is, in proportion to the square of a diameter of the windmill 30, which is a rotor, and the cube of a wind speed of the wind W. Therefore, it is important that the windmill 30 is installed at an installation site where the wind W can be stably received as much as possible.

### (Tower 10)

The tower 10 shown in Figs. 1 is made of metal such as iron and is provided by being perpendicularly stood with a perpendicular shaft L as the center with respect to an installation part 11, which is a base provided on a ground, for example, as an installation site. The tower 10 is made thickest in a lower part 12 and is tapered so that it is gradually made thinner as it goes toward an upper part 14. As a result, resistance of the wind W in the tower 10 is reduced, and weight reduction is promoted.

In a space between the installation part 11 and the lower part 12 of the tower 10, a tower drive-operation portion 13 is provided. The tower drive-operation portion 13 can be tilted with respect to the installation part 11 of the tower 10 to the ground side from the upright state along a Q direction as shown in Fig. 1(B), easy transfer can be made to the maintenance state for performing maintenance of the main body 20, the windmill 30, the power generator 40 and the like.

Specifically, as shown in Fig. 1(B), the tower drive-operation portion 13 includes a hinge part 13A and an actuator 13B such as a hydraulic cylinder and the like. When a rod 13C of a hydraulic cylinder 13D performs a contraction operation by a command from a control portion, not shown, the lower part 12 of the tower 10 can be tilted as indicated by the Q direction with respect to a tower base part 12R. Since a hydraulic actuator 13B is employed, height positions of the windmill 30, the power generator 40 and the like can be lowered. Therefore, the tower drive-operation portion 13 can transfer the main body 20, the windmill 30, and the power generator 40 to the maintenance state at the maintenance and thus, the maintenance can be performed easily. The installation work, when the wind power generator 1 is to be installed, can be performed in a short period of time, the maintenance works of the windmill 30, the power generator 40 and the like can be made easily, and a short-time maintenance work can be performed.

### <Wind-Direction Guide Portion 15>

Fig. 2 is a perspective view illustrating the main body 20, the windmill 30, and the power generator 40 shown in Figs. 1. As shown in Figs. 1 and Fig. 2, on the upper part 14 of the tower 10, a wind-direction guide portion 15 is detachably and moreover, rotatably held with the perpendicular shaft L as the center, and on the wind-direction guide portion 15, the main body 20 is detachably fixed. In a shape example of the wind-direction guide portion 15 shown in Fig. 2, a thickness t1 of the wind-direction guide portion 15 on the power generator 40 side is set larger as compared with a thickness t2 of the wind-direction guide portion 15 on the windmill 30 side, and it is formed to be gradually thinned and tapered from the thickness t1 to the thickness t2, that is, along a direction in which the wind W is received.

As described above, by employing the tapered structure of the wind-direction guide portion 15, the wind-direction guide portion 15 rotates the main body 20 in accordance with the direction of the wind W around the perpendicular shaft L. Therefore, the direction of the main body 20 can be faced to the direction of the wind W so that the force of the wind W can be received properly from the power generator 40 side to the direction of the windmill 30. As a result, the windmill 30 of the main body 20 can continue power generation by automatically facing the main wind direction by receiving the wind W from the rear and by turning aside not only normal weak wind W but also stronger wind such as strong wind W, turbulence or the like. Moreover, since there is no need to separately provide a yaw control device requiring a complicated structure which has been conventionally used, weight reduction and simplification of the structure of the wind power generator 1 can be promoted, and the costs can also be reduced.

### <Main Body 20>

On the other hand, as shown in Fig. 1(A) and Fig. 2, the windmill 30 is rotatably held at one end part 20A of the main body 20, and the power generator 40 is held at the other end part 20B of the main body 20. The windmill 30 includes three pieces of the blades 31 with the same size and the same structure, for example, and as shown in Fig. 2, each of the blades 31 extends in a radial direction by 120 degrees each around a rotation center C as the center. As a dimensional example, a diameter D of the windmill 30 shown in Fig. 1(B) is 5.6 m, for example. A total height H of the wind power generator 1 including the windmill 30 is 17.8 m, for example. A height H1 to the center of the main body 20 shown in Fig. 1(A) is 15 m, for example.

Subsequently, the main body 20 and the windmill 30 will be further explained with reference to Fig. 2 to Fig. 5.

Fig. 3 is a view illustrating the power generator 40 and the like as viewed from a V-direction in Fig. 2. Fig. 4 is a perspective view illustrating a part of the windmill 30, an internal structure example of the main body 20, and the power generator 40. In Fig. 4, illustrating of a casing of the main body 20 is omitted. Fig. 5 is a diagram illustrating a part of the windmill 30 as viewed from a V1-direction in Fig. 4, an internal structure example of the main body 20, and the power generator 40.

The main body 20 shown in Fig. 1(A) and Fig. 2 are also called nacelle as an alias name and is made in a cylindrical shape of metal with excellent weatherability such as iron and stainless. As shown in Fig. 5, the diameter of the one end part 20A of the main body 20 is preferably set smaller as compared with the diameter of the other end part 20B, and it is formed so as to be tapered little by little from the other end part 20B to the one end part 20A. As a result, along an outer peripheral surface of the main body 20, the wind W can be guided easily to the side of each of the blades 31 of the windmill 30, and the windmill 30 on the one end part 20A side can be automatically faced to the main wind direction. As a result, the windmill 30 of the main body 20 can continue power generation by automatically facing the main wind direction and by turning aside not only normal weak wind W but also stronger wind W such as strong wind, turbulence or the like.

As a result, the windmill 30 of the main body 20 can continue power generation by automatically facing the main wind direction by receiving the wind W from the rear and by turning aside not only normal weak wind W but also stronger wind W such as strong wind, turbulence or the like. By employing both of or either one of the featured tapered structure of the main body 20 and the featured tapered structure of the above-described wind-direction guide portion 15, there is no need to separately provide a large yaw control device having a complicated structure having been conventionally used and thus, weight reduction and simplification of the structure of the wind power generator 1 can be promoted, and the costs can also be reduced.

### <Horizontal Shaft 23>

As shown in Fig. 2, Fig. 4, and Fig. 5, the horizontal shaft 23 passes through the center of the main body 20, and as shown in Fig. 5, it is supported horizontally and moreover, rotatably by two bearings 21, 22. To one end part of the horizontal shaft 23, the windmill 30 is detachably fixed. On the other end part of the horizontal shaft 23, a rotor 41 of the power generator 40 is detachably provided.

### <Power generator 40>

Subsequently, the power generator 40 will be explained.

As shown in Fig. 3 to Fig. 5, the power generator 40 is a brushless direct-drive permanent magnet type, for example, and a rated output is 6.5 kW, for example. As shown in Fig. 5, the power generator 40 has the rotor 41 and a stator 42 and are protected from salt damage or flood damage by sealing preferably with a resin. The rotor 41 has a magnet, and the stator 42 has a coil. The rotor 41 is detachably fixed to the other end part of the horizontal shaft 23. The stator 42 performs power generation by generating 3-phase AC electromotive force with 300V, for example, by rotation of the rotor 41 in synchronization with the rotation of the windmill 30 generated by the normal weak wind W or the stronger wind W.

The rotor 41 of the power generator 40 employs the direct drive system of direct connection to the windmill 30 via the horizontal shaft 23 without using a gear box. The windmill 30 rotates by force of the wind W preferably within a rotation range of approximately 200 rpm to 250 rpm, for example, and thus, a gear box is not needed between the windmill 30 and the horizontal shaft 23. As a result, as compared with the case of a wind power generator using a normal gear box, simplification of a configuration of mechanism portions in the main body 20 of the wind power generator 1 and weight reduction can be promoted.

As shown in Fig. 1(A), electric power generated by the power generator 40 is sent to a rectifier 151, stored in a battery (storage battery) 153 via an inverter 152, and the stored electric power is supplied to a power supply target 154. The electric power generated by the power generator 40 is 3-phase 300V, for example, the rectifier 151 rectifies the generated electric power, and the inverter 152 converts it to 3-phase 200V, for example, and stores it in the battery 153. The power supply target 154 is a public facility or the like provided in a remote island, when the wind power generator 1 is installed in a remote island, got example, but it is not particularly limiting.

As shown in Fig. 5, a thickness N along an axial direction RT of the horizontal shaft 23 of the power generator 40 is made as thin as possible. The axial direction RT and the perpendicular shaft L of the tower 10 are orthogonal to each other. On the upper part 14 of the tower 10, an extended shaft 14B is mounted, and to an upper end part of the extended shaft 14B, a base part 20F of the main body 20 is detachably fixed. To this base part 20F, two pieces of the above-described bearings 21, 22 are fixed. The bearing 21 is fixed at a position closer to the windmill 30, while the bearing 22 is fixed at a position closer to the power generator 40. Note that, as shown in Fig. 4 and Fig. 5, as a framework constituting the wind-direction guide portion 15, a member 15B and a member 15C are provided.

As described above, by using the thin-type power generator 40 in which the thickness N of the power generator 40 is formed thin and moreover, a mounting position of the power generator 40 in the main body 20 is brought closer to the perpendicular shaft L as much as possible. A distance K1 from an outer surface of the stator 42 of the power generator 40 to the perpendicular shaft L is shorter as compared with a distance K2 from the center position of the windmill 30 to the perpendicular shaft L. In a structural body constituted by the main body 20, the windmill 30, and the power generator 40, a center of gravity G between the windmill 30 as well as the main body 20 and the power generator 40, which is heavier as compared with the weight of the windmill 30, is matched to the perpendicular shaft L of the tower 10. As a result, the structural body constituted by the main body 20, the windmill 30, and the power generator 40 can optimize the weight balance around the perpendicular shaft L as the center and rotate smoothly in accordance with the direction of the wind W around the perpendicular shaft L as the center. Since the distance K1 between the power generator 40 and the perpendicular shaft L can be made smaller as compared with the distance K2, the size of the wind power generator 1 can be reduced. The main body 20 rotates around the perpendicular shaft L as the center, automatically faces the main wind direction to the wind W from the rear with respect to the windmill 30, and can continue power generation by turning aside not only the wind W of normal weak wind but even also stronger wind W such as strong wind, turbulence or the like.

### <Structure Example of Windmill 30>

Subsequently, a preferable structure example of the windmill 30 will be explained.

As shown in Fig. 2 and Fig. 4, the windmill 30 is, as already explained, a down-wind type windmill receiving the wind W from the front of the power generator 40 side, and the windmill 30 can automatically face the main wind direction.

### <Blade 31 of Windmill 30>

As illustrated in Fig. 2 to Fig. 4, the windmill 30 has three pieces of the blades 31. Each of the blades 31 is formed of a glass thermoplastic resin composite material, for example, and is a plate-shaped member which is not deformed by the wind W, even if it receives the wind W much stronger than 70 m/sec, for example, but holds its shape and is not bent. That is, the blade 31 complies with class 1 (70 m/sec) wind-speed resistance and can continuously operate without stopping the power generation, even if 70 m/sec is exceeded. As shown in Fig. 4, the blade 31 has a base part 31B, a distal end part 31C, and an intermediate part 31D, the base part 31B has the widest width, and the width is gradually reduced from the intermediate part 31D toward the distal end part 31C. The thickness of each blade 31 is uniform from the base part 31B to the distal end part 31C, for example, or it is formed so as to be gradually thinned from the base part 31B to the distal end part 31C, but this is not limiting. As a result, the wind power generator 1 is capable of continuous power generation without breakage of the windmill 30.

Fig. 4 illustrates a pitch angle α of the blade 31. The "pitch angle α" of the blade 31 is an angle formed by the surface of the blade 31 with respect to a rotating plane PL around the horizontal shaft 23 of the windmill 30 orthogonal to the direction of the wind W.

With regard to the blade 31, the pitch angle α is not changed even if the force of weak wind W is received, but it is configured such that, when the force of stronger wind W is received, the pitch angle α of the blade 31 with respect to the direction of the force of the wind W is gradually increased in order to release the force of the stronger wind W. The blade 31 is not broken, even if it is hit by the stronger wind W such as a low atmospheric pressure or a hurricane. A change operation example of this pitch angle α of the blade 31 will be described later. As exemplified in Fig. 4, an angular range of the pitch angle α can preferably change within a range from an initial set angle 6 degrees to the maximum angle 17 degrees, for example. The initial set angle 6 degrees is that of a case in which the wind W does not hit the blade 31 set in advance, and the maximum angle 17 degrees is an angle of a case in which the stronger wind W at 70 m/sec or more, for example, hits.

### <Center Member 50 and Fixing Member 60>

As shown in Fig. 2 to Fig. 5, the windmill 30 has the blade 31, which is an example of the three blade members, one piece of the delta-type center member 50, another delta-type fixing member 60, three coupling members 70, and three pairs of elastic mechanism portions 100.

Fig. 6 is a plan view illustrating a shape example of the center member 50. Fig. 7 is a plan view illustrating a coupled state of the center member 50, the coupling member 70, and the three blades 31. Fig. 8 is a perspective view illustrating a coupled state of the center member 50, the coupling member 70, the blade 31, and the elastic mechanism portion 100 constituting the windmill 30. Fig. 9 is a perspective view illustrating the coupled state of the center member 50, the coupling member 70, the blade 31, and the elastic mechanism portion 100 constituting the windmill 30 from another angle. Note that, in Fig. 4, Fig. 5, Fig. 7 to Fig. 9, a part of the windmill 30 is illustrated for simplification of the drawings.

The center member 50 illustrated in Fig. 6 to Fig. 9 is a rotation hub of the windmill 30 and is formed of a metal plate such as iron or the like into a substantially equilateral triangular shape (plate-shaped member). As shown in Fig. 8 and Fig. 9, the center member 50 is fixed to a distal-end position of the horizontal shaft 23. The center member 50 has a plurality of holes 50H for coupling and one center hole 50R. Through the center hole 50R, the horizontal shaft 23 passes, while the horizontal shaft 23 and the center member 50 are fixed. The plurality of holes 50H are respectively aligned in series along side parts 50S formed in three linear shapes of the center member 50.

On the other hand, the fixing member 60 is, as shown in Fig. 8 and Fig. 9, formed of a metal plate such as iron or the like into an equilateral triangular shape (plate-shaped member), for example, similarly to the center member 50, and the fixing member 60 is fixed in the middle of the horizontal shaft 23 and at a position in the middle of the horizontal shaft 23 so as to face the center member 50. However, each apex 60S of the fixing member 60 is located at a position corresponding to a center position of one side part 50S of the center member 50. As shown in Fig. 5, the center member 50 and the fixing member 60 are rotatable around the axial direction RT of the horizontal shaft 23 integrally with the horizontal shaft 23 by using the two bearings 21, 22 in the main body 20. Note that, between the center member 50 and the fixing member 60, a holding member 60J for reinforcement is provided, and even if strong wind W blows, relative positions and an interval between the center member 50 and the fixing member 60 are held, and deformation of the center member 50 and the fixing member 60 is prevented.

### <Coupling Member 70>

Subsequently, the coupling member 70 will be explained with reference to Fig. 7 to Fig. 13.

Figs. 10 are front views illustrating a shape example of the coupling member 70, and Fig. 11 is a sectional view on a J-J line of the coupling member 70. As shown in Fig. 10, the coupling member 70 is a plate-shaped member having a substantially right-angled triangular shape and is capable of elastic deformation. As shown in Fig. 7 and Fig. 8, the coupling member 70 is disposed between the base part 31B of each of the blades 31 and each of the side parts 50S of the center member 50 and detachably couples the base part 31B of each of the blades 31 and each of the side parts 50S of the center member 50.

As shown in Figs. 10, the coupling member 70 has a linear first edge part 66, a linear second edge part 67, a linear first side part 68, a linear second side part 69, a linear first bending portion 71, and a linear second bending portion 72. The first edge part 66 is inclined by an angle θ of most preferably, approximately 45 degrees, for example, with respect to the second edge part 67. By selecting this angle θ preferably within a range from 30 degrees to 60 degrees, when each of the blades 31 receives the stronger wind W, a wind-receiving area of the wind W in the blade 31 is made smaller, whereby the rotation of the windmill 30 is stalled to some degree on purpose, upon receipt of the stronger wind W. Thus, since a thrust force applied to the horizontal shaft 23 of the main body 20 can be reduced, while the rotation of the windmill 30 is suppressed, the force applied to the tower 10 itself from the main body 20 can be made smaller. As a result, even if extremely strong wind W blows, the force applied to the tower 10 itself can be reduced, the thickness of the tower 10 itself can be made smaller, and size reduction of the wind power generator 1 can be promoted. If the angle θ is smaller than 30 degrees or larger than 60 degrees, each of the blades 31 of the windmill 30 easily receives the extremely strong wind W, which is not preferable.

As shown in Fig. 10, the first side part 68 and the second side part 69 are in parallel, and the first side part 68 and the second side part 69 are perpendicular to the second edge part 67. The first bending portion 71 is formed in parallel to the first edge part 66, and the second bending portion 72 is formed in parallel to the second edge part 67. The first bending portion 71 and the second bending portion 72 are formed by slightly thinning the thickness as compared with the other parts, for example. As shown in Fig. 8 and Fig. 9, each of the first edge parts 66 is detachably fixed to the base part 31B of each of the blades 31. In addition, each of the second edge parts 67 is detachably fixed to each of the side parts 50S of the center member 50. As a result, the first bending portion 71 has a function of bending the base part 31B of each of the blades 31 with respect to the coupling member 70 and changing the pitch angle α of the blade 31 shown in Fig. 4 with respect to a C1 direction shown in Fig. 10(A) and Fig. 8, when the force of the wind W is received. Similarly, when the force of the strong wind W is received, the second bending portion 72 has a function of bending the coupling member 70 with respect to the center member 50 in a C2 direction shown in Fig. 10(A) and Fig. 8.

As shown in Fig. 11, the coupling member 70 is formed by a main layer 75, a reinforcing member 76, and covering layers 77, 78. The main layer 75 is made in a flat plate shape of a material with high softness and moldability such as a resin elastomer or the like. The covering layers 77, 78 are thin metal plates of aluminum, stainless steel or the like and ensure softness and weatherability of the main layer 75 by covering front and back of the main layer 75.

Figs. 12 illustrate an example of the reinforcing member 76 disposed in the main layer 75 of the coupling member 70, in which Fig. 12(A) illustrates a state in which a force is not applied to the coupling member 70, and Fig. 12(B) illustrates a state in which the coupling member 70 is bent in the C1 direction in the first bending portion 71. The reinforcing member 76 is disposed in the main layer 75 for reinforcing tensile strength and bending strength and is a rope made of a resin such as polyester or the like, for example.

### <Reinforcing member 76 of Coupling Member 70>

In the example shown Figs. 12, the rope-like reinforcing member 76 is disposed so as to be spirally uniform over the entire main layer 75 of the coupling member 70. A Z-direction (main direction) in the disposition of the rope-like reinforcing member 76 is a direction from the first bending portion 71 toward the second bending portion 72 and is disposed so that alternate bending at the first edge part 66 and the second edge part 67 causes the reinforcing member 76 to be repeatedly parallel between the first edge part 66 and the second edge part 67.

In addition, the reinforcing member 76 is disposed so as to intersect the first bending portion 71 and the second bending portion 72 and thus, it reinforces not only the entire coupling member 70 but also reinforces the first bending portion 71 and the second bending portion 72. The reinforcing member 76 ensures tensile strength and bending strength particularly in the Z-direction from the first bending portion 71 toward the second bending portion 72. As a result, when each of the blades 31 receives not only the weak wind W but stronger wind W or when the coupling member 70 is pulled or bent in the direction from the first bending portion 71 toward the second bending portion 72, occurrence of a crack, rupture or the like in the main layer 75 with rich softness shown in Fig. 11 can be prevented. Therefore, the coupling member 70 is light-weighted and does not have to ensure strength by using a large, thick and robust member made of metal, and the blade 31 is only coupled to the center member 50 by using the coupling member 70 and thus, size reduction and weight reduction of the windmill 30 itself can be realized, and even if the wind force increases, by following the wind force, stable power generation can be continued without breakage or interrupting power generation.

As shown in Figs. 10, a plurality of holes 66H, 67H for respective coupling are formed along the linear first edge part 66 and the linear second edge part 67 of the coupling member 70.

Fig. 13 is a diagram illustrating a detachable coupling example of the coupling member 70. Fig. 13 illustrates a detachable coupling example of the first edge part 66 of the coupling member 70 and the base part 31B of the blade 31 and a detachable coupling example of the second edge part 67 of the coupling member 70 and the side part 50S of the center member 50. The coupling of the first edge part 66 of the coupling member 70 and the base part 31B of the blade 31 and the coupling of the second edge part 67 of the coupling member 70 and the side part 50S of the center member 50 are detachably fixed by using a bolt 80 and a nut 81 both having strong weatherability against salt damage or the like, for example. As a result, when regular maintenance is performed for the blade 31, the coupling member 70, and the center member 50 every 5 years, for example, they can be easily dissembled by removing the bolt 80 and the nut 81, and maintenance management of the wind power generator 1 at the installation site is facilitated.

### <Elastic Mechanism Portion 100>

Subsequently, with reference to Fig. 14, Fig. 4, Fig. 8, and Fig. 9, the elastic mechanism portion 100 will be explained.

Fig. 14(A) is a front view illustrating a preferable structure example of the elastic mechanism portion 100, and Fig. 14(B) is a is a cross-sectional view on the A-A line in Fig. 14 (A) .

With regard to one mounting base part 103 and the other mounting base part 104 of the elastic mechanism portion 100 illustrated in Fig. 14, as shown in Fig. 8 and Fig. 9, the coupling member 70 fixed to the side of each of the blades 31 is detachably fixed to the vicinity of the first bending portion 71 and the fixing member 60, respectively. As shown in Fig. 2, when the blade 31 receives the force of the wind W in the direction of the windmill 30 from the power generator 40 side, the elastic mechanism portion 100 has a role of suppressing, by a resilient force, movement of the vicinity part of the first bending portion 71 of the coupling member 70 and movement of the blade 31 with respect to the center member 50 and the fixing member 60 by the force of the wind W and can turn aside the wind W by maximizing the pitch angle α of the blade 31 in the case of the wind W stronger than 70 m/sec, for example.

In a structure example of the elastic mechanism portion 100 shown in Fig. 14, the elastic mechanism portion 100 has two first elastic members 101, 101, two second elastic members 102, 102, and two mounting base parts 103, 104. The first elastic member 101 and the second elastic member 102 are both compression coil springs made of metal or a resin, and the second elastic member 102 is thicker than the first elastic member 101, and a spring constant of the second elastic member 102 is set larger than the spring constant of the first elastic member 101. The two first elastic members 101, upon receipt of the force of the weak wind W shown in Fig. 2, bend the blade 31 shown in Fig. 4 with respect to the coupling member 70 together with the first bending portion 71 of the coupling member 70 shown in Fig. 10 and singularly exert an elastic force by.

Subsequently, the two second elastic members 102 have a tensile elastic force stronger than that of the first elastic member 101. Thus, upon receipt of the force of the strong wind W, when the second bending portion 72 of the coupling member 70 shown in Fig. 10 bends the coupling member 70 with respect to the center member 50 shown in Fig. 4, the second elastic member 102 exerts the tensile elastic force together with the first elastic member 101.

In the illustrated example, two pieces of the first elastic members 101 and two pieces of the second elastic members 102 are aligned in parallel on the same plane between the two mounting base parts 103, 104. The two pieces of the first elastic members 101 are disposed at positions between the two pieces of the second elastic members 102, and each of the second elastic members 102 is disposed at left and right positions of the two pieces of the first elastic members 101, respectively.

As shown in Fig. 8, the one mounting base part 103 is detachably fixed to the first bending portion 71 side of the coupling member 70, while the other mounting base part 104 is detachably fixed to an edge part 60T of the fixing member 60. The one mounting base part 103 is detachably fixed to the first bending portion 71 side of the coupling member 70, and it is not directly fixed to the base part 31B of the blade 31 so that the blade 31 can ensure the pitch angle α relatively freely.

Incidentally, both end parts of the first elastic member 101 and both end parts of the second elastic member 102 shown in Fig. 14 are both fixed to the mounting base parts 103, 104. Until the two pieces of the first elastic members 101 receive the force of the weak wind W shown in Fig. 2, and the first bending portion 71 shown in Fig. 8 causes the base part 31B of the blade 31 to be bent with respect to 70, when the elastic force is to be exerted singularly, the two pieces of the second elastic members 102 are dead areas where the tensile elastic force is not exerted.

That is, when the weak wind W is applied to the blade 31, only the two pieces of the first elastic members 101 exert the tensile elastic force first, but since the force of the weak wind W is not applied to the two pieces of the second elastic members 102, they are in a standby state without exerting the tensile force. And when the force of the stronger wind W or more is applied to the blade 31, in addition to the two pieces of the first elastic members 101 exerting the tensile force, it is configured such that they exert the tensile force stronger than that of the two pieces of the second elastic members 102. The elastic mechanism portion 100 can exert the nonlinear tensile elastic force by using the elastic members 101, 102 with two types of different spring constants. If elastic members with the same spring constant are used, only linear tensile elastic force can be exerted.

In the Embodiment of the present invention, the elastic mechanism portion 100 employs the structure that the tensile elastic force becomes nonlinear as described above, because, as already described, wind power energy of the wind W is in proportion to the wind receiving area of the wind W in the blade 31, that is, the square of the diameter of the windmill 30, which is the rotor, and is in proportion to the cube of the wind speed of the wind W. As a result, with the elastic mechanism portion 100, even when the windmill 30 including the three blades 31 receives the force of the weak wind W or the force of the rapidly raised stronger wind W or more, the windmill 30 can continuously rotate in response to the rapid change in the wind force energy of the wind W, and each of the blades 31 of the windmill 30, the coupling member 70, and the center member 50 are not broken. Note that, in order to improve the weatherability of the elastic mechanism portion 100, the elastic mechanism portion 100 may be covered with a film member or a plate member excellent in weatherability, though not shown.

### (Explanation of Operation Example and Working Effects of Wind Power Generator 1)

Subsequently, with reference to the drawings in Figs. 15 and after, an operation example and working effects of the above-described wind power generator 1 will be explained.

Figs. 15 illustrate a state in which the form of the windmill 30 changes in accordance with intensity of the force of the wind W received by the windmill 30, in which Fig. 15(A) illustrates a status example of the blade 31 of the windmill 30 which is receiving the force of the weak wind W, while Fig. 15(B) illustrates a status example of the blade 31 of the windmill 30 which is receiving the force of the strong wind W.

Fig. 16(A) to Fig. 16(C) and Fig. 17(D) to Fig. 17(E) are perspective views illustrating status examples of the blade 31, when the forces of no wind W, the strong wind W, the stronger wind W, and the extremely strong wind W are received.

Note that a range of wind speed examples received by the windmill 30 exemplified in the following explanation and values of the wind speeds of the winds W illustrate examples only for facilitating understanding of the explanation and are not limiting.

First, the wind power generator 1 of the Embodiment of the present invention shown in Figs. 15 uses downwind, which is the wind W from the power generator 40 toward the windmill 30, and the windmill 30 can continue the power generation operation without stopping even in the case of the stronger wind W at the wind speed of 70 m/sec. On the other hand, for a normally-used wind power generator, when the strong wind at approximately 25 m blows, the rotation of the windmill needs to be stopped in order to prevent breakage of the windmill.

As shown in Fig. 15(A), the main body 20 of the wind power generator 1 has the wind-direction guide portion 15, which is tapered from the power generator 40 side to the windmill 30 side, and this wind-direction guide portion 15 is disposed between the main body 20 and the upper part 14 of the tower 10. As a result, the wind-direction guide portion 15 can cause the blade 31 of the windmill 30 to automatically face the direction of the wind W by rotating the main body 2 around the perpendicular shaft L as the center so that the direction of the main body 20 becomes the direction in which the force of the wind W is received in the direction of the windmill 30 from the power generator 40 side.

Moreover, the tubular or cylindrical main body 20 is formed so as to be tapered from the other end part 20B, which is a part holding the power generator 40, toward the one end part 20A, which is a part holding the windmill 30. As a result, the direction of the main body 20 can be caused to automatically face the direction of the wind W by rotating around the perpendicular shaft L as the center so that the direction of the main body 20 becomes the direction in which the force of the wind W is received in the direction of the windmill 30 from the power generator 40 side. With respect to the tapered structure of the wind-direction guide portion 15 and the tapered structure of the main body 20, both of them may be employed or at least one of them may be provided.

In any case, for the windmill 30, a so-called free yaw structure, which enables automatic facing in the direction of the wind W, is employed. As a result, the wind power generator 1 of the Embodiment of the present invention does not separately need a usually-used yaw control device. Therefore, the structure of the wind power generator 1 can be facilitated, and reduction of the weight and cost reduction can be promoted.

### <Behavior of Windmill 30 within Range of Wind Speed of First Stage ST1>

Fig. 16(A) illustrates a behavior of the windmill 30 in a range example of the wind speed at a first stage ST1. As the range of the wind speed example received by the windmill 30 in this case, a range from no wind 0 m/sec to weak wind at approximately 11 m/sec is cited as the wind speed of the wind W.

The blade 31 itself shown in Fig. 4 is not deformed or broken even if it receives stronger wind W by a low atmospheric pressure, a hurricane or the like. At the first stage ST1 in which the blade 31 receives no wind to the force of the weak wind W, the bending phenomenon does not occur in the first bending portion 71 of the coupling member 70, either. Therefore, the pitch angle α of each of the blades 31 remains the initial setting angle α0 (6 degrees) and does not change. In addition, the elastic mechanism portion 100 has not exerted the tensile elastic force. As a result, while the blade 31 is receiving the relatively weak wind W at the first stage, the power generator 40 can generate power by continuously rotating the windmill 30 so as not to break the blade 31.

### <Behavior of Windmill 30 within Range of Wind Speed of Second Stage ST2>

Subsequently, Fig. 16(B) illustrates a behavior of the windmill 30 in a range example of the wind speed at a second stage ST2. As the range of the wind speed example received by the windmill 30 in this case, a range from weak wind at 11 m/sec to slightly strong wind at approximately 20 m/sec is cited as the wind speed of the wind W.

When the blade 31 receives the force of the wind W of the second stage ST2, with respect to the blade 31, by receiving the force of the wind W, the first bending portion 71 of the coupling member 70 is bent to the C1 direction with respect to the center member 50 and the coupling member 70. However, no force is applied to the elastic mechanism portion 100, and the elastic mechanism portion 100 has not exerted the tensile elastic force. As a result, the pitch angle α of the blade 31 can be slightly increased to a pitch angle α1 (α1 > α0). By means of the change of an attitude of each blade 31, the wind-receiving area of the blade 31 receiving the wind W decreases and thus, a rotation number of the windmill 30 becomes approximately the same as the case of the first stage ST1, and the rotation of the windmill 30 does not stop. Therefore, when the blade 31 receives the wind W at the second stage ST2, the windmill 30 continuously rotates, and the power generator 40 can generate power in a state in which the attitude of the blade 31 itself of the windmill 30 is slightly changed. At this time, the shape of the blade 31 itself is not deformed at all.

### <Behavior of Windmill 30 within Range of Wind Speed of Third Stage ST3>

Subsequently, Fig. 16(C) illustrates a behavior of the windmill 30 in a range example of the wind speed at a third stage ST3. In this case, the range of the wind speed example received by the windmill 30 is from slightly strong wind at 20 m/sec to stronger wind at approximately 50 m/sec as the wind speed of the wind W. When the blade 31 receives the force of the strong wind W at the third stage ST3, by means of the force of the strong wind W, the blade 31 further resists the tensile elastic force of the first elastic member 101 of the elastic mechanism portion 100, and the second bending portion 72 of the coupling member 70 is bent to the C2 direction with respect to the center member 50. As a result, the pitch angle α of the blade 31 can be increased to a pitch angle α2 (α2 > α1). Therefore, the pitch angle α2 of the blade 31 increases with respect to the direction of the wind W and thus, the blade 31 receives the wind W by releasing the wind W. By means of the change of an attitude of each blade 31, the wind-receiving area of the blade 31 receiving much stronger wind W decreases and thus, the rotation number of the windmill 30 becomes the same or smaller as compared with the case of the second stage ST2, but the rotation of the windmill 30 does not stop. At this time, the shape of the blade 31 itself has not deformed at all. Therefore, when the blade 31 receives the wind W at the third stage ST3, the windmill 30 continuously rotates smoothly in a state in which the attitude of the blade 31 of the windmill 30 is further changed, and the power generator 40 can generate power.

### <Behavior of Windmill 30 within Range of Wind Speed of Fourth Stage ST4>

Subsequently, Fig. 17(D) illustrates a behavior of the windmill 30 in a range example of the wind speed at a fourth stage ST4. In this case, the range of the wind speed example received by the windmill 30 is extremely strong wind at 50 m/sec or more as the wind speed of the wind W. When the blade 31 receives the force of much stronger wind W at the subsequent fourth stage ST4, the blade 31 resists the tensile elastic force of the second elastic member 102 of the elastic mechanism portion 100 by means of the force of the wind W, and the first bending portion 71 of the coupling member 70 is further bent to the C1 direction with respect to the coupling member 70 and the center member 50. As a result, though the shape of the blade 31 itself is not changed, the attitude of the blade 31 is further changed with respect to the coupling member 70 and the center member 50, and the pitch angle α of the blade 31 becomes the maximum angle α3 (α3 = 17 degrees > α2). Therefore, the blade 31 can receive the wind W by actively releasing the wind W. At this time, the shape of the blade 31 itself is not deformed at all. Since the attitude of each blade 31 is changed, the wind-receiving area of the blade 31 receiving much stronger wind W is decreased and thus, the rotation number of the windmill 30 becomes the same or smaller than that at the third stage ST3, but the rotation of the windmill 30 is not stopped and can be prepared for the subsequent change in the state of the wind W.

And when the wind W returns to the range of the first stage ST1 shown in Fig. 17(A) again, for example, the state of the windmill 30 returns to the state shown in Fig. 17(A). In addition, when the wind W returns to the range of the second stage ST2 shown in Fig. 17(B) again, the state of the windmill 30 returns to the state shown in Fig. 17(B). Moreover, when the wind W returns to the range in Fig. 17(C), the state of the windmill 30 returns to the state shown in Fig. 17(C).

As described above, the windmill 30 including the three blades 31 can continuously generate power while smoothly rotating without damage for a long time regardless of intensity of the force of the wind W. At the time of strong wind, the blade 31 is pushed to the direction of the wind W, but the force of the wind W is actively released by reducing the wind-receiving area of the wind W in each blade 31 in accordance with the intensity of the wind speed and moreover, deformation or breakage of the blade 31 itself does not occur. As a result, the wind power generator 1 can continue the power generation not only with the normal weak wind W but also with the strong wind W at 25 m/sec or more. The blade 31 is preferably formed of a glass thermoplastic resin complex material, which is a rigid body, and deformation or breakage does not occur even in the case of the strong wind exceeding 25 m/sec or stronger wind reaching 70 m/sec or further exceeding it. Therefore, the wind power generator 1 can continue the power generation operation without stopping the power generation.

Fig. 18 illustrates a variation of the first elastic member 101 and the second elastic member 102 which occurs when the first elastic member 101 and the second elastic member 102 of the elastic mechanism portion 100 shown in Fig. 8 and Fig. 14 exert the tensile elastic force, upon receipt of the wind force. A lateral axis in Fig. 18 indicates deflection of the first elastic member 101 and the second elastic member 102, and a longitudinal axis indicates loads applied to the first elastic member 101 and the second elastic member 102.

As shown in Fig. 18, a linear area S0 indicates a case using a single spring having usually-used one type of spring constant, and the deflection with respect to the load simply increases in direct proportion over the entire region of the loads.

On the other hand, when the elastic mechanism portion 100 of the Embodiment of the present invention is used, in a linear area S1 in which the first elastic member 101 exerts the tensile elastic force, when the wind force is weak, the deflection with respect to the load increases in direct proportion with relatively small inclination and thereafter, the wind force increases, and in a linear area S2 in which the thick second elastic member 102 exerts the tensile elastic force in addition to the thin first elastic member 101, the inclination rapidly increases and then, becomes a linear area S3 after that. As a result, unlike the deflection with respect to the load changing in the linear area S0, which is usually the same all the time, the elastic mechanism portion 100 can exert a non-linear tensile elastic force in plural stages of the linear areas S1, S2, S3. The elastic mechanism portion 100 as above is employed in order to improve the power generation efficiency by changing the pitch angle α of the blade 31 in accordance with the intensity of the wind speed in response to the non-linear rise of the force of the wind W as much as possible correspondingly to such a characteristic that the force of the wind W rises in proportion to the cube of the wind speed.

Fig. 19(A) illustrates a relationship example of a wind power-generation output and a wind speed of the wind power generator 1 of the Embodiment of the present invention, while Fig. 19(B) illustrates a relationship example of the wind power-generation output and the wind speed of the wind power generator of a comparative example.

As shown in Fig. 19(A), when the rated output of the power generator 40 is 6.5 kW, for example, if the cut-in wind speed is 2.5 m/sec, for example, with regard to the wind power-generation output of the power generator 40, power generation can be started from the cut-in wind speed and performed at the maximum rated output. Moreover, since there is no cut-out wind speed, the windmill 30 does not stop rotation and thus, an additional power-generation portion BT can be ensured without output decrease or output loss of the wind power-generation output by the cut-out wind speed. The blade 31 can continuously generate power as addition regardless of the size of the wind speed, while maintaining a balance among a centrifugal force, a centripetal force, and a lifting force by the rotation. Even if the cut-in wind speed, which is the minimum rotatable wind-speed, is 2.5 m/sec, for example, the cut-out wind speed, which is the maximum acceptable wind-speed, is limitless, and the cut-out wind speed is applied to the windmill 30, the windmill 30 continuously rotate and operate without breakage and continue the power generation.

On the other hand, in the comparative example in Fig. 19(B), the cut-in wind speed is 3 to 5 m/sec. When the cut-out wind speed reaches 24 to 25 m/sec, the rotation of the windmill is forcibly stopped, and the wind power-generation output becomes zero and thus, as compared with the Embodiment of the present invention in Fig. 19(A), an output is reduced or lost only by an additional power-generation portion V.

The windmill 30 of the above-described wind power generator 1 rotates, while maintaining the balance among the centrifugal force, the lifting force, and the centripetal force applied to each blade 31 and can continue power generation without stopping even in the case of the strong wind or violent wind, while each blade 31 releases the force of the wind W by changing the wind-receiving area of the blade 31 itself in accordance with the intensity of the force of the wind W, and while the windmill 30 maintains the rotation number of 200 rpm to 250 rpm, for example. In addition, since each blade 31 releases the force of the wind W by reducing the wind-receiving area of the blade 31 itself by changing the pitch angle in accordance with the intensity of the force of the wind W, occurrence of a buzzing noise of the wind can be suppressed, and noise-reduction of the wind power generator 1 can be promoted.

The wind power generator 1 does not need a large-scale yaw control device and the like, which have been conventionally used, but the structure thereof is simple, and a trouble would not occur easily. The wind power generator 1 can continue the power generation even under the strong wind or violent wind and can be installed in any harsh installation environment such as a remote island, a desert island or the like. As examples of applications of the wind power generator 1, electric communication businesses, military purposes, industrial or railway businesses, international support businesses, desalination businesses of seawater and the like can be cited, and since necessity of maintenance management at a site or preparation management is low, standalone power generation is realized without depending on domestic electric-power network. In addition, this wind power generator 1 can be an alternative for a conventionally-used diesel power generator, which is environment-friendly. The wind power generator 1 has a simple structure and is capable of size reduction and thus, it can be transported by a truck and installed only by human power.

### (Another Embodiment)

### <Power transmission device 400>

Subsequently, another Embodiment of the above-described present invention will be explained with reference to Fig. 20 to Fig. 25.

Fig. 20 illustrates a preferable structure example of a power transmission device 400 disposed inside the main body 20 shown in Fig. 5 and the power generator 40.

As shown in Fig. 20, the main body 20 has mounting members 20R, 20S, 20T, which are a plurality of frameworks, and these mounting members 20R, 20S, 20T couple the fixing member 60 and the power generator 40. The mounting members 20R, 20S, 20T form an internal space SS in the main body 20. The power transmission device 400 is accommodated in the internal space SS of the main body 20, and the power transmission device 400 is protected in a state isolated by the main body 20 from the external environment.

The power transmission device 400 is disposed so as to be horizontal in the internal space SS of the main body 20 not at a position particularly closer to the one end part 20A of the main body 20 but at a position closer to the other end part 20B of the main body 20 closer to the position of the power generator 40. As a result, the length of a power-generator cable 490 wired between the power generator 40 and the power transmission device 400 can be made shortest, and power-transmission loss of the power generated by the power generator 40 can be made smallest.

Moreover, the power transmission device 400 is detachably fixed in the horizontal state with respect to the mounting member 20T in the internal space SS of the main body 20 and on the mounting member 20T. As a result, a replacement work or a maintenance work of the power transmission device 400 itself are facilitated. The power transmission device 400 is disposed in the internal space SS and between the mounting member 20T and the horizontal shaft 23, and the presence of the power transmission device 400 does not interfere with the rotation of the horizontal shaft 23.

Fig. 21 is a cross-sectional diagram illustrating a preferable structure example of the power transmission device 400 and its peripheral part shown in Fig. 20 in more detail.

Fig. 22 illustrates a power transmission system in which electric power generated by the power generator 40 is transmitted to the rectifier 151 via the power transmission device 400 and a power-transmission cable 500.

The power transmission device 400 shown in Fig. 20 and Fig. 21 plays a role of transmitting the electric power generated by the power generator 40 shown in Fig. 20 to the rectifier 151 side via the power-generator cable 490 and the power-transmission cable 500 shown in Fig. 22. The power transmission device 400 shown in Fig. 20 and Fig. 21 has an accommodating container 401 shown in Fig. 23 to Fig. 25.

Fig. 23 is a front view having a partial cross-section illustrating a structure example of the accommodating container 401. Fig. 24 is a side view of an accommodating main-body 402 in Fig. 23 as viewed from an E-direction, and Fig. 25 is a plan view of the accommodating main-body 402 in Fig. 23 as viewed from an F-direction.

### <Accommodating Container 401>

As shown in Fig. 21 to Fig. 23, the accommodating container 401 is constituted by the accommodating main-body 402 and a lid body 403. The accommodating main-body 402 and the lid body 403 of the accommodating container 401 have durability against salt damage or a change in a moisture or an atmospheric pressure and is made of a material which can be earthed to the main body 20 side such as a copper alloy, for example. As shown in Fig. 23, the accommodating main-body 402 is a container having a bottom part 411 and an opening part 408. As shown in Fig. 24 and Fig. 25, on the accommodating main-body 402, a flange part 404 is formed horizontally over the entire periphery.

As shown in Fig. 21 and Fig. 23, on an upper surface 405 of the flange part 404, in order to ensure close contact between the upper surface 405 and a lower surface 406 of the lid body 403 and to hold air-tightness in the accommodating main-body 402, a rubber-seal-like seal member 466 is disposed. As shown in Fig. 21, the flange part 404 and the lid body 403 are detachably fixed by a plurality of bolts 407 and nuts 409, and the bolt 407 passes through a bolt hole 410 formed in the flange part 404 shown in Fig. 25.

As shown in Fig. 25, the shape of the accommodating main-body 402 is formed as a substantially elliptic shape or a substantially rhombus when seen from above, but it is not particularly limiting. As shown in Fig. 21 and Fig. 23, the bottom part 411 of the accommodating main-body 402 has a nut part 412 for mounting, another nut part 413 for mounting, a through hole 414 through which the power-transmission cable 500 and the like are passed, and a cylindrical part 420. In addition, as shown in Fig. 23, a nut part 415 is formed on a side part of the accommodating main-body 402.

The nut part 412 shown in Fig. 23 is formed by protruding to a lower surface side of the bottom part 411. The nut part 413 is formed on the inner surface side of the bottom part 411. The through hole 414 is formed at a position away from the nut part 412 and the nut part 413 in the bottom part 411 and at a position closer to the other end part 20B of the main body 20 shown in Fig. 20. The circular through hole 414 shown in Fig. 23 goes to the inside of the cylindrical part 420. The cylindrical part 420 is formed by protruding downward from the bottom part 411, and the inside of the accommodating main-body 402 goes to an outside of the accommodating main-body 402 through the cylindrical part 420. The nut part 415 is formed by penetrating a side-wall part 416 of the accommodating main-body 402.

As shown in Fig. 21, the accommodating container 401 accommodates a slip ring 430 and a brush 440 in a state sealed from the external environment. The accommodating container 401 accommodates and protects the slip ring 430 and the brush 440 in the sealed state and prevents intrusion of an ignitable gas such as sulfur dioxide gas into the accommodating container 401 and contact of the slip ring 430 and the brush 440 with the ignitable gas. As a result, the accommodating container 401 ensures water-proof performance of the power transmission device 400 for preventing rainwater and seawater, while ensuring explosion-proof performance of the power transmission device 400 and moreover, achieves prevention of salt damage of the power transmission device 400. The accommodating container 401 is electrically grounded with respect to the mounting member 20S made of metal, for example, by using an earth wire 425.

As shown in Fig. 21, the bottom part 411 of the accommodating main-body 402 is detachably fixed to the mounting member 20T by using a bush 460, which is a buffer material, and a mounting bolt 461. The mounting bolt 461 is screwed into the nut part 412 from the mounting member 20T side. In addition, the cylindrical part 420 of the accommodating main-body 402 is inserted into a through hole 20Q of the mounting member 20T and is fixed to the mounting member 20T. The cylindrical part 420 is held with respect to the mounting member 20T via a member 499, a member 444, and a sleeve 20U. The member 499 is fixed to an outer peripheral surface of the extended shaft 14B of the upper part 14 of the tower 10. The sleeve 20U is disposed between the cylindrical part 420 and a guide tube 445.

Through an inside 429 of the guide tube 445, the power-transmission cable 500 is passed, and the guide tube 445 protects the power-transmission cable 500 from the external environment. The guide tube 445 is preferably led downward through the inside of the extended shaft 14B of the upper part 14 of the tower 10, and the power-transmission cable 500 reaches a lower end part of the tower 10 shown in Fig. 1 and is electrically connected to the rectifier 151 shown in Fig. 22.

### <Slip Ring 430 and Brush 440>

Subsequently, the slip ring 430 and the brush 440 shown in Fig. 21 will be explained.

The slip ring 430 is a cylindrical member made of a material having conductivity such as copper, for example, and has a hole 431 for fitting at the center of the inside. Into this hole 431 for fitting, an upper end part 446 of the guide tube 445 is fitted and fixed. On the upper end part of the slip ring 430, electric connection parts 432, 433 and the like are provided, and electric cable wires 501, 502 of the power-transmission cable 500 are detachably, electrically and moreover, mechanically connected to each of the electric connection parts 432, 433 through bolts.

On the other hand, the brush 440 shown in Fig. 21 is a brush made of a material having conductivity and durability against friction such as carbon, for example, and three pieces thereof are prepared correspondingly to the 3-phase AC. Each brush 440 is in electric and moreover, mechanical contact all the time with a position corresponding to each phase of the 3 phases of the slip ring 430.

Each brush 440 is electrically and moreover, mechanically connected to a connection end part of the power-generator cable 490, respectively. The power-generator cable 490 is led out to an outer side of the accommodating container 401 through an electric insulating guide member 491. The guide member 491 is detachably fixed to the nut part 415 of the accommodating main-body 402 so that the power-generator cable 490 can be removed or replaced easily.

### <Power-Generator Cable 490>

The power-generator cable 490 is, as shown in Fig. 22, electrically and moreover, mechanically connected to the stator 42 of the power generator 40. Returning to Fig. 21, each brush 440 is detachably screwed into the nut part 413 of the accommodating container 401 by using a mounting bolt 492 so as to be fixed to the accommodating container 401 in the accommodating container 401. As a result, replacement of each brush 440 can be performed easily.

The main body 20 shown in Fig. 20 is a rotating-side region part or a movable element rotating around the perpendicular shaft L in accordance with an actual wind direction. On the other hand, the slip ring 430 in the accommodating container 401 shown in Fig. 21, the power-transmission cable 500, the guide tube 445, and the extended shaft 14B of the tower 10 have integral structures and unlike the main body 20, they are not-rotating fixed-side region parts or not-rotating fixed elements.

Moreover, when the main body 20 rotationally moves or rotates around the perpendicular shaft L in accordance with the actual wind direction, the accommodating container 401, each brush 440, and the power-generator cable 490 rotationally move or rotate in the integral structure with the main body 20. With respect to the slip ring 430, the power-transmission cable 500, the guide tube 445, and the extended shaft 14B of the tower 10, which are above-described fixed-side region parts or the not-rotating fixed elements, the accommodating container 401, each brush 440, the power-generator cable 490, and the main body 20 are rotating-side region parts relatively rotating around the perpendicular shaft L or movable elements.

### <Brake Device 700>

As shown in Fig. 20, the main body 20 includes a brake device 700. This brake device 700 includes a disk 701, a brake pad 702, and a wire 703 for pulling. The disk 701 is fixed to the horizontal shaft 23. For example, when a manager wants to stop rotation of the horizontal shaft 23, that is, rotation of the windmill 30 for some reason such as inspection or maintenance, for example, or at emergency, the manager pulls the wire 703 downward. As a result, the brake pad 702 can sandwich the disk 701 and forcedly stop the rotation of the horizontal shaft 23, and the blade 31 of the windmill 30.

### <Operation Example of Power transmission device 400>

Subsequently, an operation example of the above-described power transmission device 400 will be explained in brief.

In Fig. 22, by means of rotation of the rotor 41 of the power generator 40 to the RT direction in synchronization with the rotation of the windmill 30 generated by the wind W, the stator 42 of the power generator 40 generates 3-phase AC electromotive force at 300 V, for example, and generates power.

The generated 3-phase AC electromotive force is sent to each brush 440 shown in Fig. 21 through the power-generator cable 490 shown in Fig. 22 and is supplied from each brush 440 to the slip ring 430. And the 3-phase AC electromotive force is sent to the rectifier 151 shown in Fig. 22 via the electric cable wires 501, 502 of the power-transmission cable 500. This rectifier 151 rectifies the generated electric power, and the inverter 152 converts it to the 3-phase 200 V, for example, and then, stores it in the battery 153.

When the wind power generator 1 shown in Fig. 1 generates power by using the force of the wind W, the direction of the main body 20 is caused to face the direction of the wind W so that the force of the wind W can be properly received from the power generator 40 side to the direction of the windmill 30. As a result, the windmill 30 of the main body 20 can automatically face the main wind direction by efficiently receiving the wind W from the rear and can rotate by turning aside not only the normal weak wind W but even the stronger wind W such as strong wind, turbulence or the like and thus, there is such a merit that the power generator 40 can continue power generation all the time as long as there is the wind W.

At this time, the slip ring 430 shown in Fig. 21 is integrated with the fixed-side tower 10 also shown in Fig. 1 and is fixed to the tower 10 side without rotating. However, each brush 440 can rotationally move or rotate together with the accommodating container 401 with the main body 20 around the perpendicular shaft L in accordance with the direction of the main body 20, and each brush 440 can rotate in electric and moreover, mechanical contact with the peripheral surface of the slip ring 430 all the time. Therefore, with regard to the direction of the main body 20, even if the direction of the wind W changes from time to time, each brush 440 can constantly transmit electric power to the slip ring 430 all the time and can supply electric power stably and smoothly.

Moreover, the accommodating container 401 accommodates the slip ring 430, and the brush 440 in a sealed state and protects the electric contact part between the slip ring 430 and the brush 440. As a result, the accommodating container 401 ensures the water-proof performance for preventing rainwater or seawater and moreover, prevents salt damage, while ensuring the explosion-proof performance by preventing intrusion of the ignitable gas with respect to the slip ring 430 and the brush 440. Therefore, the wind power generator 1 shown in Fig. 1 can stably supply electric power even under the harsh environment such as a high-temperature environment, a low-temperature environment, an environment with strong wind and rain, an environment exposed to seawater or the like.

As shown in Fig. 20, in the wind power generator 1 of the Embodiment of the present invention, the main body 20 is made of metal in a cylindrical shape, and in the main body 20, the power transmission device 400 which sends the electric power generated by the power generator 40 from the main body 20 to the tower 10 side as shown in Fig. 22 is disposed. As a result, the power transmission device 400 can be protected by the main body 20 from the harsh external environment such as solar radiation, wind and rain, salt damage or the like and thus, the electric power generated by the power generator 40 can be safely supplied to the tower 10 side stably for a long time.

The slip ring 430 on the fixed side of the power transmission device 400 shown in Fig. 22 is fixed to the tower 10 side. As a result, when the main body 20 and the windmill 30 rotate around the perpendicular shaft L with respect to the tower 10 on the fixed side, the slip ring 430 does not rotate with the rotating operation of the main body 20 side but is fixed. On the other hand, the brush 440 on the movable side is in electric and moreover, mechanical contact with the fixed-side slip ring 430 and is fixed to the main body 20 side via the accommodating container 401. The accommodating container 401 accommodates the slip ring 430 and the brush 440 in a sealed state, and the accommodating container 401 rotates together with the main body 20 and the brush 440 by following the rotating operation of the main body 20 generated in accordance with the direction in which the wind W blows.

As a result, when the main body 20 rotates around the perpendicular shaft L with respect to the tower 10 in accordance with the direction in which the wind W blows, the brush 440 is rotatable integrally with the main body 20, and the brush 440 can stably transmit the electric power generated by the power generator 40 to the slip ring 430 all the time, while in electric and moreover, mechanical contact.

As shown in Fig. 21, the accommodating container 401 has the accommodating main-body 402 and the lid body 403. The accommodating main-body 402 is fixed to the main body 20 side, accommodates the slip ring 430 and the brush 440, and has the opening part 408. The lid body 403 detachably closes the opening part 408 of the accommodating main-body 402 and seals the slip ring 430 and the brush 440 in the accommodating main-body 402 from the outside. As described above, by sealing and closing the opening part 408 of the accommodating main-body 402 by the lid body 403, the slip ring 430 and the brush 440 in the accommodating main-body 402 can be protected by the main body 20 and the accommodating container 401 from the harsh external environment such as solar radiation, wind and rain, and salt damage.

As a result, the electric power generated by the power generator 40 can be safely supplied to the tower 10 side stably for a long time. In addition, the lid body 403 detachably closes the opening part 408 of the accommodating container 401 and thus, by removing the lid body 403, the slip ring 430 and the brush 440 can be easily maintained, and maintainability is improved.

The electric power generated by the power generator 40 is 3-phase AC electromotive force, and as shown in Fig. 1, the power generator 40 is formed as a thin type with respect to the axial direction of the horizontal shaft 23. The gravity center between the windmill 30 and the power generator 40 in the main body 20 matches the shaft center (perpendicular shaft L) of the tower 10, and the slip ring 430 is located at the shaft center of the tower 10. As a result, the slip ring 430 can be fixed at the top part of the tower 10, which is a stable position. And in accordance with the direction in which the wind W blows, when the main body 20 and the accommodating container 401 rotate around the shaft center of the tower 10 as the center with respect to the tower 10, the brush 440 can transmit the electric power from the brush 440 to the slip ring 430 side in electric and moreover, mechanical and reliable contact around the shaft center of the tower 110 in the periphery of the slip ring 430 located at the shaft center of the tower 10.

To the slip ring 430 shown in Fig. 21, the power-transmission cable 500 for transmitting electric power is electrically connected. The power-transmission cable 500 shown in Fig. 22 is electrically connected to the power supply target 154 through the tower 10. The power-transmission cable 500 can be protected from the harsh external environment such as solar radiation, wind and rain, and salt damage by being passed through the tower 10 and thus, the electric power generated by the power generator can be safely supplied to the power supply target through the tower 10 stably for a long time.

As shown in Fig. 1, the tower 10 has a tower drive-operation portion 13 capable of transfer from the upright state with respect to the installation part of the tower 10 to the maintenance state for performing maintenance by being tilted. As a result, the tower drive-operation portion 13 can transfer the main body 20, the windmill 30, and four units of the power generators to the maintenance state at the maintenance. In this maintenance state, the lid body 403 can be easily removed from the accommodating main-body 402 shown in Fig. 21 and thus, the slip ring 430 and the brush 440 in the accommodating main-body 402 can be easily replaced or regular maintenance can be performed, whereby maintenance performance is improved.

As above, the Embodiment of the present invention has been explained. However, the present invention is not limited to the above-described Embodiment but is capable of various changes within a range not departing from the scope of claims. The configuration of the above-described Embodiment can be partially omitted or arbitrarily combined differently from the above.

For example, the windmill 30 uses three pieces of the blades, but two or four pieces of the blades may be used. The power generator 40 has the magnet rotor and the coil stator, but a coil rotor and a magnet stator may be used. Note that the reinforcing member 76 does not have to be in a rope-state but may be in a mesh-state, for example.

Each of the illustrated shapes of the accommodating container 401, the slip ring 430, and the brush 440 is an example, and an arbitrary shape can be employed.

### Reference Signs List

- 1: Wind power generator
- 10: Tower
- 11: Installation part
- 12: Lower part of tower
- 13: Tower drive-operation portion
- 14: Upper part of tower
- 15: Wind-direction guide portion
- 20: Main body
- 23: Horizontal shaft
- 30: Windmill
- 31: Blade (example of blade member)
- 31B: Base part of blade
- 40: Power generator
- 41: Rotor
- 42: Stator
- 50: Center member
- 60: Fixing member
- 70: Coupling member
- 71: First bending portion of coupling member
- 72: Second bending portion of coupling member
- 75: Main layer
- 76: Reinforcing member
- 77, 78: Covering layer
- 100: Elastic mechanism portion
- 101: First elastic member
- 102: Second elastic member
- 151: Rectifier
- 152: Inverter
- 153: Battery (Storage battery)
- 154: Power supply target
- 400: Power transmission device
- 401: Accommodating container
- 402: Accommodating main-body
- 403: Lid body
- 430: Slip ring
- 440: Brush
- 445: Guide tube
- 490: Power-generator cable
- 500: Power-transmission cable
- 700: Brake device
- L: Perpendicular shaft
- RT: Axial direction
- ST1: First stage
- ST2: Second stage
- ST3: Third stage
- ST4: Fourth stage
- α, α0 to α3: Pitch angle of blade
- G: Center of gravity
- K1, K2: Distance
- PL: Rotating plane
- W: Wind

## Claims

1. A wind power generator, which rotates a windmill by using wind force, transmitting a rotating motion of said windmill to a power generator and converting it to electricity, comprising:
a tower; and
a main body rotatably supported in said tower, wherein
said windmill is rotatably held on one end part of said main body, said power generator is held by the other end part of said main body, and a horizontal shaft part transmitting said rotating motion from said windmill to said power generator is accommodated in said main body,
said windmill includes:
a center member fixed to said horizontal shaft part;
a fixing member fixed to said horizontal shaft part in a state facing said center member at an interval;
a plurality of blade members;
a coupling member disposed between a base part of each of said blade members and said center member and coupling said base part of said blade member and said center member; and
an elastic mechanism portion disposed between a part of said coupling member on said base part side of said blade member and said fixing member and suppressing movement of said blade member with respect to said fixing member generated by said wind force, when said blade member receives said wind force from said power generator side in a direction of said windmill,
said coupling member has a first bending portion provided on said base part side of said blade member and bending said blade member with respect to said coupling member so as to enlarge a pitch angle of said blade member with respect to a direction of said wind force, upon receipt of said wind force and a second bending portion provided on said center member side and bending said coupling member with respect to said center member, upon receipt of said force of wind, which is strong, so as to further enlarge the pitch angle of said blade member with respect to the direction of said wind force, and
when said wind force, which is much stronger, is received after said coupling member is bent with respect to said center member in said second bending portion, said first bending portion is further bent in order to release said wind force, and the pitch angle of said blade member with respect to the direction of said wind force is further enlarged.

2. The wind power generator according to claim 1, wherein
said elastic mechanism portion has:
a first elastic member which exerts a tensile elastic force, upon receipt of said strong wind force; and
a second elastic member that has stronger tensile elastic force than that of said first elastic member and exerts the tensile elastic force subsequent to said first elastic member.

3. The wind power generator according to claim 1 or 2, wherein
said blade member is a plate-shaped member that can bear said wind force and is **characterized by** being formed to be tapered from said base part side toward a distal end part on the side opposite to said base part.

4. The wind power generator according to claim 3, wherein
said blade member is a plate-shaped member formed of a glass thermoplastic resin composite material.

5. The wind power generator according to claim 2, wherein
said first elastic member is constituted by a plurality of coil springs, said second elastic member is constituted by a plurality of the coil springs; and
immediately after said first elastic member received said strong wind force and exerted said tensile elastic force, said second elastic member has a dead area in which said tensile elastic force is not exerted, and while said first elastic member exerts said tensile elastic force, said second elastic member continuously exerts said tensile elastic force.

6. The wind power generator according to claim 1 or 2, wherein
said windmill has three pieces of said blade members, and said center member and said fixing member are equilateral triangular plate-shaped members, respectively, and said first bending portion side of said coupling member is detachably fixed to said base part of said blade member, and said second bending portion side of said coupling member is detachably fixed to one side part of said center member.

7. The wind power generator according to claim 1 or 2, wherein
said power generator is formed as a thin type with respect to an axial direction of said horizontal shaft part, and a gravity center between said windmill and said power generator in said main body matches a shaft center of said tower.

8. The wind power generator according to claim 7, wherein
said power generator has:
a rotor coupled to said horizontal shaft part and having a magnet; and
a stator having a coil generating power by rotation of said rotor in synchronization with rotation of said windmill, and said power generator is a brushless power generator.

9. The wind power generator according to claim 8, wherein
said windmill and said rotor of said power generator are directly connected by said horizontal shaft part without via a gear box.

10. The wind power generator according to claim 1, wherein
said main body is made of metal in a cylindrical shape, and in said main body, a power transmission device which sends power generated by said power generator from said main body side to said tower side is disposed.

11. The wind power generator according to claim 10, wherein
said power transmission device includes:
a slip ring on a fixed side, which does not follow a rotating operation on said main body side, when said main body rotates with respect to said tower in accordance with said direction in which wind blows, since said power transmission device is fixed to said tower side;
a brush in electric and moreover, mechanical contact with said slip ring on the fixed side and fixed to said main body side and thus, capable of integral rotation with said main body, when said main body rotates with respect to said tower in accordance with said direction in which the wind blows, and transmitting the electric power generated by said power generator to said slip ring; and
an accommodating container accommodating said slip ring and said brush in a sealed manner and rotating with said main body and said brush by following the rotating operation of said main body generated in accordance with said direction in which the wind blows.

12. The wind power generator according to claim 11, wherein
said accommodating container includes:
an accommodating main-body fixed to said main body side, accommodating said slip ring and said brush, and having an opening part; and
a lid body detachably closing said opening part of said accommodating main-body and sealing said slip ring and said brush in said accommodating main-body from an outside.

13. The wind power generator according to claim 11, wherein
electric power generated by said power generator is 3-phase AC electromotive force, said power generator is formed as a thin type with respect to an axial direction of said horizontal shaft part, a gravity center between said windmill and said power generator in said main body matches a shaft center of said tower, and said slip ring is located at said shaft center of said tower.

14. The wind power generator according to claim 13, wherein
to said slip ring, a power transmission cable for transmitting electric power to an electric-power supply target is electrically connected, and said power transmission cable is electrically connected to said electric-power supply target through an inside of said tower.

15. The wind power generator according to claim 10, wherein
said main body includes a brake device for stopping rotation of said horizontal shaft part.

16. The wind power generator according to claim 12, wherein
said tower has a tower drive-operation portion which can transfer from an upright state to a maintenance state for maintenance by being tilted with respect to an installation part of said tower.

17. A control method of a wind power generator which rotates a windmill by using wind force, transmitting a rotating motion of said windmill to a power generator and converting it to electricity, comprising a tower and a main body rotatably supported in said tower, wherein said windmill is rotatably held on one end part of said main body, said power generator is held on the other end part of said main body, a horizontal shaft part transmitting said rotating motion from said windmill to said power generator is accommodated in said main body, said windmill has a center member fixed to said horizontal shaft part, a fixing member fixed to said horizontal shaft part in a state facing said center member at an interval, a plurality of blade members, and a coupling member disposed between a base part of each of said blade members and said center member and coupling said base part of said blade member and said center member, wherein
an elastic mechanism portion disposed between a part of said coupling member on said base part side of said blade member and said fixing member suppresses movement of said blade member with respect to said fixing member generated by said wind force, when said blade member receives said wind force from said power generator side in a direction of said windmill,
a first bending portion of said coupling member is provided on said base part side of said blade member and bends said blade member with respect to said coupling member and enlarges a pitch angle of said blade member with respect to a direction of said wind force, upon receipt of said wind force,
a second bending portion of said coupling member is provided on said center member side and bends said coupling member with respect to said center member, upon receipt of said wind force, which is strong, and further enlarges the pitch angle of said blade member with respect to the direction of said wind force, and
when the wind force, which is stronger, is received after said coupling member is bent with respect to said center member in said second bending portion, said first bending portion is further bent in order to release said wind force, and the pitch angle of said blade member with respect to the direction of said wind force is further enlarged.

18. A control program of a wind power generator for causing a wind power generator which rotates a windmill by using wind force, transmitting a rotating motion of said windmill to a power generator and converting it to electricity, comprising a tower and a main body rotatably supported in said tower, wherein said windmill is rotatably held on one end part of said main body, said power generator is held on the other end part of said main body, a horizontal shaft part transmitting said rotating motion from said windmill to said power generator is accommodated in said main body, said windmill has a center member fixed to said horizontal shaft part, a fixing member being fixed to said horizontal shaft part in a state facing said center member at an interval, a plurality of blade members, and a coupling member disposed between a base part of each of said blade members and said center member and coupling said base part of said blade member and said center member, to realize:
a function that an elastic mechanism portion disposed between a part of said coupling member on said base part side of said blade member and said fixing member suppresses movement of said blade member with respect to said fixing member generated by said wind force, when said blade member receives said wind force from said power generator side in a direction of said windmill,
a function that a first bending portion of said coupling member is provided on said base part side of said blade member and bends said blade member with respect to said coupling member upon receipt of said wind force and enlarges a pitch angle of said blade member with respect to a direction of said wind force,
a function that a second bending portion of said coupling member provided on said center member side and bends said coupling member with respect to said center member upon receipt of said wind force, which is strong, and further enlarges the pitch angle of said blade member with respect to the direction of said wind force, and
a function that, when said wind force, which is stronger, is received after said coupling member is bent with respect to said center member in said second bending portion, said first bending portion is further bent in order to release said wind force, and the pitch angle of said blade member with respect to the direction of said wind force is further enlarged.
